# EUROPÄISCHE PATENTSCHRIFT

(11) **EP 1 068 093 B1**
(45) Veröffentlichungstag und Bekanntmachung des Hinweises auf die Patenterteilung: **06.03.2002**
(21) Anmeldenummer: 99944128.0
(22) Anmeldetag: 06.04.1999
(51) Int. Cl.: B60N 2/02

(54) **Spindel- oder Schneckenantrieb für Verstelleinrichtungen in Kraftfahrzeugen**
Spindle or worm drive for adjusting devices in motor vehicles
Entraînement par broche ou vis sans fin destiné aux équipements de réglage de véhicules automobiles

(30) Priorität: 06.04.1998 DE 19815283
(43) Veröffentlichungstag der Anmeldung: 17.01.2001
(73) Patentinhaber: Brose Fahrzeugteile GmbH & Co. KG Coburg, 96450 Coburg (DE)
(72) Erfinder: TAUBMANN, Werner, D-96486 Lautertal (DE); MACHT, Alwin, D-96250 Ebensfeld (DE); SCHRIMPL, Bernhard, D-96450 Coburg (DE); LIEBETRAU, Matthias, D-96450 Coburg (DE)
(74) Vertreter: Baumgärtel, Gunnar, Dr.
(86) Internationale Anmeldenummer: DE9901082
(87) Internationale Veröffentlichungsnummer: WO9951456

(56) Entgegenhaltungen:
- EP-A- 0 359 008
- WO-A-86/06036
- DE-A- 1 755 740
- DE-A- 3 007 102
- DE-A- 4 021 669
- US-A- 5 267 717

## Beschreibung

Die Erfindung betrifft einen Spindel- oder Schneckenantrieb für Verstelleinrichtungen in Kraftfahrzeugen nach dem Oberbegriff des Anspruchs 1.

Aus der DE-OS 17 55 740 ist ein Spindelantrieb für eine Verstelleinrichtung an einem Kraftfahrzeugsitz bekannt. Der Kraftfahrzeugsitz ist hier auf zwei parallelen Gleitschienen befestigt, die auf am Fahrzeugboden angeordneten Führungsschienen laufen. Parallel zu jeder Gleitschiene und mit dieser drehfest verbunden ist je eine Gewindespindel angeordnet.

Neben den ortsfesten Führungsschienen und mit diesen fest verbunden ist ein Getriebeblock gelagert, der eine auf der Gewindespindel angeordnete Spindelmutter und eine mit dieser kämmende Antriebsschnecke aufnimmt. Die Antriebsschnecken jedes Getriebeblockes stehen mit einem gemeinsamen Antriebsmotor in Verbindung. Der Getriebeblock besteht aus zwei Teilen, die miteinander verschraubt sind.

Wird der Antriebsmotor betätigt, werden über die Antriebsschnecken die Spindelmuttern verdreht. Da die Gewindespindel drehfest angeordnet ist, werden dadurch die Gewindespindel und der mit dieser verbundene Fahrzeugsitz relativ zum Getriebeblock und damit zum Fahrzeugboden verschoben.

Diese Lösung hat den Nachteil, daß der Getriebeblock in seiner Herstellung kostenaufwendig ist. Der Getriebeblock selbst ist zu groß, so daß dieser zum Beispiel nicht innerhalb der Schienen angeordnet werden kann.

Aus der DE 40 21 669 A1 ist ein Gehäuse für einen elektrischen Hilfsantrieb bekannt, das zwei Halbschalen aufweist, die mittels elastischer Rastelemente zusammengehalten werden.

Aus der DE 43 24 913 Cl ist ein Gehäuse für einen elektrischen Stellantrieb bekannt, das aus einer Gehäuseschale und einem Gehäusedeckel besteht, die einerseits über elastische Schnappelemente miteinander verbunden sind und die sich andererseits über zusätzliche Stützstellen aneinander abstützen.

Aus der DE 30 07 102 ist eine Vorrichtung der eingangs genannten Art zum Verändern der Lamellenneigung bei einer Lamellenjalousie bekannt, mit einer drehbaren Antriebswelle, einer auf der Antriebswelle angeordneten Schnecke; einem mit der Schnecke in Eingriff stehenden drehbaren Schneckenrad; einem einstückigen Gehäuse mit zwei spiegelbildlich ausgebildeten Gehäuseteilen; einem festen Gelenk, das die Gehäuseteile miteinander so verbindet, daß sie sich zwischen einer Öffnungsstellung und einer Schließstellung bewegen lassen; zwei Lagerteilen an jedem Gehäuseteil, die ein Lager für die Antriebswelle und die Schnecke bilden, sowie jeweils ein Lager als Lagerung für das Schneckenrad in Schließstellung der Gehäuseteilung; und eine die Gehäusestellung in ihrer Schließstellung festhaltende Einrichtung. Diese Einrichtung umfaßt einen L-förmigen Befestigungsbügel, der mittels zweier Steckverbindungen sowie mittels eines Verschlußriegels mit den beiden Gehäuseteilen verbunden wird. Die Steckverbindungen dienen dabei zur Fixierung der Gehäuseteile in einer Ebene und der Verschlußriegel zu deren Fixierung senkrecht hierzu.

Die Aufgabe der Erfindung besteht darin, ein Getriebegehäuse für einen Spindel- oder Schneckenantrieb für Verstelleinrichtungen in Kraftfahrzeugen zu entwickeln, das kostengünstig herstellbar und montierbar ist. Das Getriebegehäuse soll klein und kompakt sein und so den Einbau innerhalb der Schienen erlauben, wobei trotzdem gewährleistet sein muß, daß im Falle der Blockierung des Getriebes der Fahrzeugsitz in eine Stellung verfahren werden kann, die dessen Ausbau ermöglicht.

Diese Aufgabe wird durch die Schaffung eines Antriebs mit den Merkmalen des Anspruchs 1 gelöst.

Danach ist vorgesehen, daß die Getriebeelemente in einem Getriebegehäuse lagern, das aus wenigstens zwei mittels Steckverbindungen aneinander befestigten Gehäuseplatten besteht, wobei die Steckverbindungen gleichzeitig als tragende, die Getriebekräfte aufnehmende Verbindungsstellen dienen und entsprechend starr ausgebildet sind. Ein als Gewindespindel ausgebildetes Getriebeelement wird dabei entsprechend den Ansprüchen 34 bis 42 vorzugsweise über mindestens eine Sollbruchstelle in mindestens einer Halterung gehalten, und mindestens ein Ende der Gewindespindel ist als Formschlußelement ausgebildet, das mit einem drehenden Werkzeug verbunden werden kann, um die Sollbruchstelle zum Zwecke der Notbetätigung zu überwinden.

Weiterhin ist vorgesehen, daß mittels der Steckverbindungen die Lage der Gehäuseplatten zueinander in allen Raumrichtungen fixiert ist. Diese Fixierung der Gehäuseplatten kann z.B. durch Verstemmen des Materials im Bereich der Steckverbindungen, durch Laserschweißen oder Vergießen der Steckverbindungen sowie durch Kleben der Steckverbindungen erfolgen. Weitere Merkmale hierzu können den Ansprüchen 27 bis 33 entnommen werden, die sich auf ein Verfahren zur Montage des Getriebegehäuses beziehen.

Die Erfindung hat den Vorteil, daß die Größe des Getriebes gegenüber vergleichbaren Getrieben wesentlich reduziert werden kann, da die der Befestigung der einzelnen Gehäuseteile dienenden Steckverbindungen gleichzeitig auch zur Aufnahme von Getriebekräften geeignet sind. Somit ist die Anwendung des erfindungsgemäßen Getriebes auch für Kraftfahrzeugsitze möglich, bei denen der Sitz auf sehr schmalen Schienen gelagert ist, bzw. es wird die Möglichkeit erschlossen, auf schmale Schienenführungen überzugehen.

Ferner ist es vorteilhaft, wenn die Gehäuseplatten ausschließlich an den genannten Steckverbindungen aneinander befestigt sind. Hierdurch wird mit einem Minimum an Aufwand eine tragende Verbindung zwischen den einzelenen Gehäuseteilen geschaffen: es ist nicht notwendig, separate Befestigungsmittel einerseits und der Aufnahme von Getriebekräften dienende Stützstellen andererseits vorzusehen.

Die Herstellung des Getriebes ist auch bei geringen Stückzahlen rentabel. Es werden Herstellungskosten eingespart, da die Gehäuseteile und die Werkzeuge kostengünstig herstellbar sind. Nach der Montage des Gehäuses erübrigt sich eine Nachbearbeitung der Gehäuseplatten.

Die Einsatzmöglichkeiten des Getriebes sind groß. Insbesondere durch dessen Größe und dessen geringes Gewicht kann es für Antriebe verwendet werden, für sich der Einsatz derartiger Getriebe bisher nicht möglich war.

Nachfolgend soll die Erfindung anhand von Ausführungsbeispielen näher erläutert werden. Die dazugehörigen Zeichnungen haben folgende Bedeutung:
- Figur 1 -: Perspektivische Darstellung eines Spindelantriebs (Darstellung einer Seite der Lagerung des Fahrzeugsitzes);
- Figur 2 -: Gewindespindel mit Getriebe einschließlich Halterung;
- Figur 3 -: Halterung für ein Getriebe;
- Figur 4 -: Explosivdarstellung des Getriebes einschließlich Halterung;
- Figur 5 -: Darstellung des Getriebes im zusammengebauten Zustand;
- Figur 6 -: Gehäuseplatte mit Lagerbohrung für Antriebsschnecke;
- Figur 7 -: Gehäuseplatte mit Lagerbohrung für Spindelmutter;
- Figur 8 -: Darstellung einer L-förmigen Gehäuseplatte;
- Figur 9 -: Darstellung einer U-förmigen Gehäuseplatte in Verbindung mit einer scheibenförmigen Gehäuseplatte;
- Figur 10 -: Lagerung der Gewindespindel mit einem quetschbaren Gewindeelement als Verdrehsicherung und zur Notbetätigung;
- Figur 11 -: Lagerung der Gewindespindel mit einem quetschbaren Durchzug;
- Figur 12 -: Lagerung der Gewindespindel mit einer über eine Kontermutter verspannte Gewindeelement als Verdrehsicherung;
- Figur 13 -: Lagerung der Gewindespindel mit einer lagefixierten Mutter, die über eine Kontermutter auf der Gewindespindel verspannt ist;
- Figur 14 -: Lagerung der Gewindespindel mit einer Verdrehsicherung aus Kunststoff;
- Figur 15 -: Schnittdarstellung von Figur 14;
- Figur 16 -: Darstellung einer Verdrehsicherung der Gewindespindel mit einer Kunststoffsicherung;
- Figur 17 -: Verdrehsicherung der Gewindespindel über eine Schweißquetschmutter mit Distanzbuchse;
- Figur 18 -: Prinzipskizze eines Verstellantriebs mit einer Zahnstange und
- Figur 19 -: Darstellung eines Spindelantriebs für einen Fensterheber.

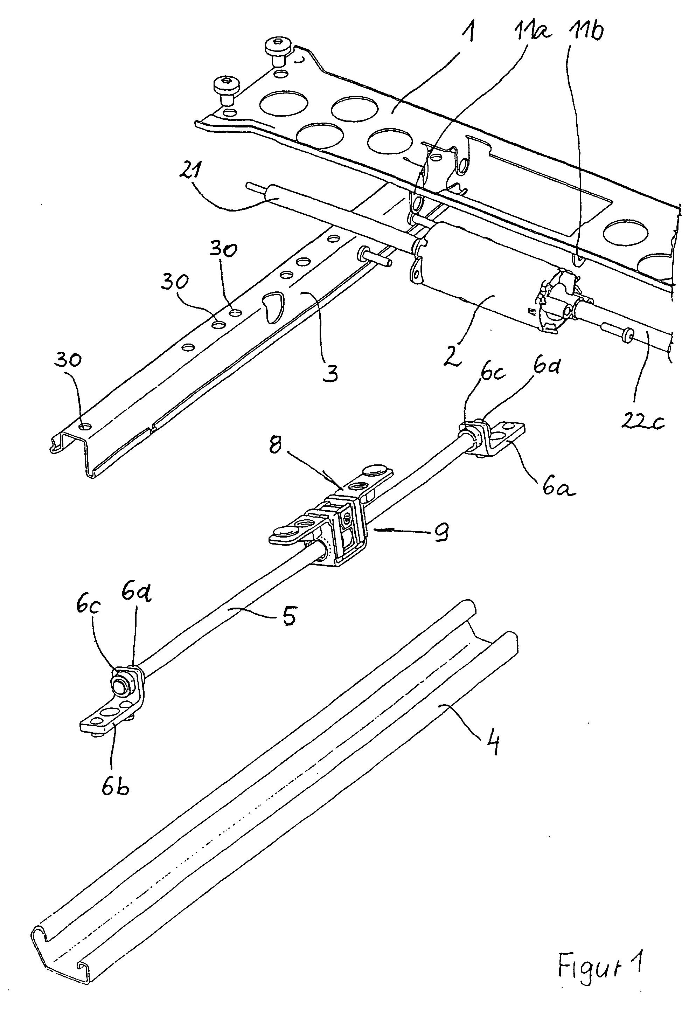

Wie aus der Figur 1 ersichtlich, ist eine Halteplatte 1 einer Oberschiene 3 zugeordnet. An der Halteplatte 1 sind Befestigungslaschen 11a; 11b für den Antriebsmotor 2 vorgesehen, so daß der Antriebsmotor 2 fest mit der Halteplatte 1 und damit fest mit der Oberschiene 3 verbunden ist.

Das Obergestell des hier nicht dargestellten Fahrzeugsitzes wird auf der Oberschiene 3 befestigt.

Beidseitig am Antriebsmotor 2 sind Antriebswellen 21 und 22 angeordnet. Vorzugsweise werden hierzu flexible Wellen verwendet. Diese Antriebswellen 21; 22 stellen die Verbindung zu einem Getriebe 9 her, dessen Lage, Ausbildung und Funktion weiter unten näher erläutert wird.

Die Oberschiene 3 gleitet direkt oder über nicht dargestellte Verstell- und/oder Lagerelemente auf einer am Fahrzeugboden festgelegten Unterschiene 4.

In Funktionslage der Oberschiene 3 und Unterschiene 4 werden diese durch ihre Berührungs- bzw. Lagerungsbereiche so gehalten, daß sich ein Hohlraum 31 ergibt. Innerhalb dieses Hohlraums 31 ist eine Gewindespindel 5 angeordnet, wobei diese zwischen Halterungen 6a und 6b aufgenommen wird, die auf der Unterschiene 4 fest angeordnet sind. Die Verbindung zwischen den Halterungen 6a; 6b erfolgt über Befestigungsmuttern 6c; 6d; 6c'; 6d'.

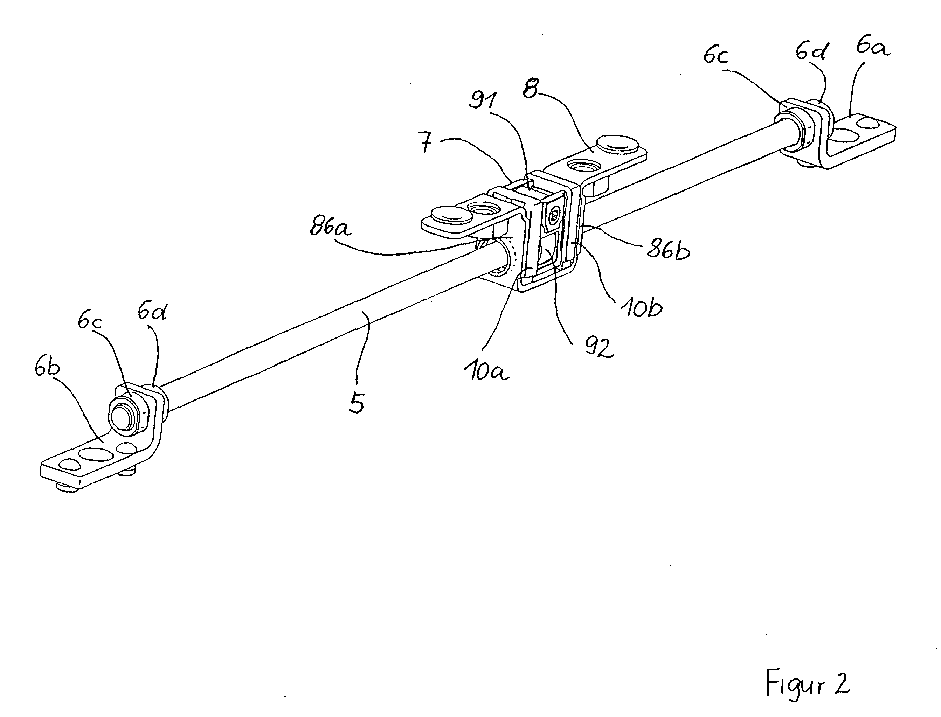

Die Gewindespindel 5 wirkt mit dem Getriebe 9 zusammen, das ebenfalls im Hohlraum 31 angeordnet und ortsfest in der Oberschiene 3 gelagert ist. Diese Anordnung wird in Figur 2 gezeigt. Das Getriebe 9 wird in einer U-förmigen Halterung 8 gehalten, die mit der hier nicht dargestellten Oberschiene 3 fest verbunden ist. Zwischen den Schenkeln 86a; 86b der Halterungen 8 und dem Getriebe 9 sind Entkopplungselemente 10a; 10b eingefügt, um entstehende Geräusche zu entkoppeln und Toleranzen auszugleichen.

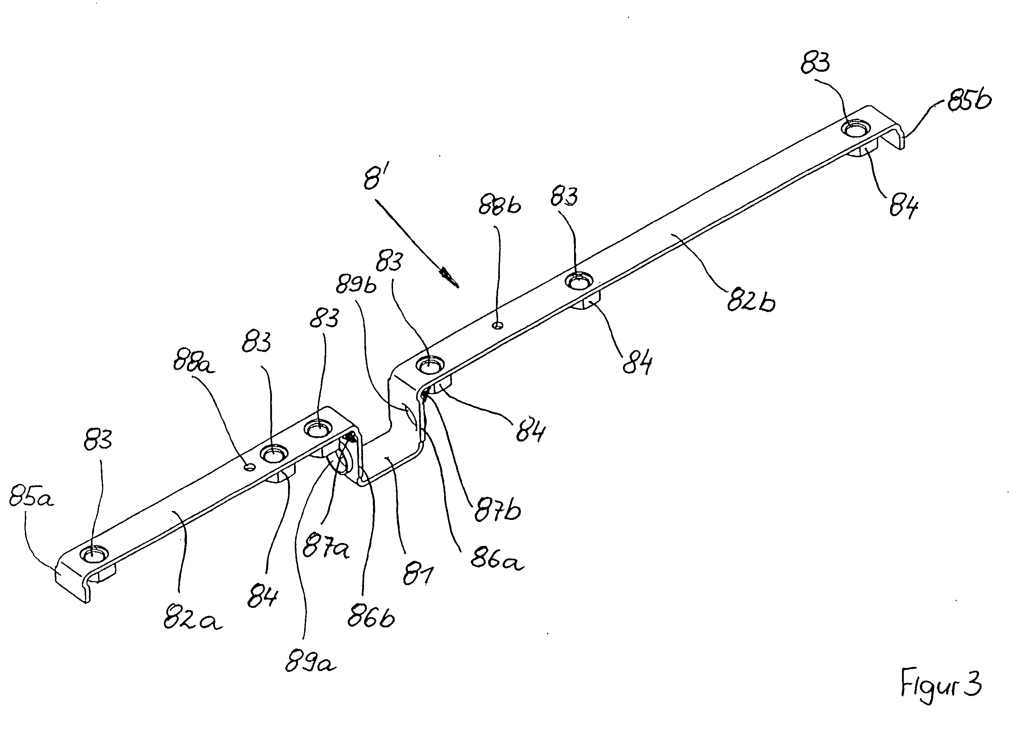

Eine weitere Ausgestaltung der Lagerung des Getriebes 9 besteht darin, diese in der Oberschiene 3 über eine verlängerte Halterung 8' zu realisieren. Diese Halterung wird in der Figur 3 gezeigt. Das hier nicht dargestellte Getriebe 9 ist analog der in Figur 2 gezeigten Art im Getriebeaufnahmeteil 81 der Halterung 8' gelagert. Die Schenkel 82a; 82b der Halterung 8' sind an der Oberschiene 3 befestigt. Im Ausführungsbeispiel sind diese mit der Oberschiene 3 verschraubt. Aus diesem Grunde weisen die Schenkel 82a; 82b Befestigungsöffnungen 83 auf, die mit den in Figur 1 dargestellten Befestigungsöffnungen 30 in der Oberschiene 3 korrespondieren. Den Befestigungsöffnungen 83 werden Schweißmuttern 84 zugeordnet, das heißt, die Schweißmuttern 84 werden auf die Öffnungen geschweißt. Dabei weisen die Schweißmuttern 84 in Richtung des Hohlraumes 31. Anstelle der Schweißmuttern 84 sind auch Einheitsmuttern oder Stanzmuttern einsetzbar. Eine andere Möglichkeit besteht darin, statt der Muttern Durchzüge herzustellen, die mit einem Innengewinde versehen sein können. Auch Kombinationen der oben beschriebenen Möglichkeiten sind einsetzbar. Durch diese Verbindung bzw. Verschraubung der Halterung 8' mit der Oberschiene 3 wird deren Steifigkeit verbessert. Durch die Anordnung der oben genannten Schweißmuttern 84 bzw. der Durchzüge ist es möglich, das Getriebe 9 mit der Halterung 8' vorher komplett zu montieren und diese Einheit in den Hohlraum 31 der bereits montierten Schienenführung 3; 4 einzuschieben. Über die Befestigungsöffnungen 83 und kann die Oberschiene 3 mit der Halterung 8' verschraubt werden.

Die Halterungen 8; 8' weisen in einer weiteren Ausgestaltung Sollverformungsstellen 87a; 87b auf, die zwischen Schenkeln 86a; 86b der Getriebeaufnahme 81 und den Schenkeln 82a; 82b der Halterung 82a; 82b angeordnet sind. Diese Sollverformungsstellen 87a; 87b können im einfachsten Fall entsprechend dimensionierte Schweißnähte sein. Es ist aber auch möglich, als Sollverformungsstellen 87a; 87b Winkel oder andere Profile an dieser Stelle einzusetzen. Alle diese Elemente werden so dimensioniert, daß diese erst bei einer vorgegebenen Sollbelastung nachgeben und erst dann die Schenkel 86a; 86b bzw. die Getriebeaufnahme 81 verformt wird. Das geschieht dann so, daß beim Überschreiten einer vorgegebenen maximalen Grenzbelastung die Schenkel 86a; 86b seitwärts schwenken und dabei die Gewindespindel 5 verklemmen. Im Crashfall trägt das zu einer zusätzlichen Sicherung des Fahrzeugsiczes bei.

Die beiden Schenkel 82a; 82b der Halterung 8' sind abgewinkelt und weisen in den Winkelbereichen 85a; 85b eine Materialverbreiterung auf, die den Hohlraum 31 weitestgehend ausfüllt. Dadurch kann die Steifigkeit der Schienenführung, das heißt, deren Widerstand gegen das Einknicken, verbessert werden. Die Verhakung der Oberschiene 3 mit der Unterschiene 4 bleibt im Eingriff.

In den Schenkeln 82a; 82b eingebrachte Bohrungen 88a; 88b dienen der Zentrierung der Halterung 8' zur Oberschiene 3, zum Beispiel durch hier nicht dargestellte Blindnieten. Die in den Schenkeln 86a; 86b angeordneten Durchzüge 89a; 89b erhöhen den kritischen Querschnitt des Haltewinkels 8' und tragen zu einer sicheren Kraftübertragung im Crashfall bei.

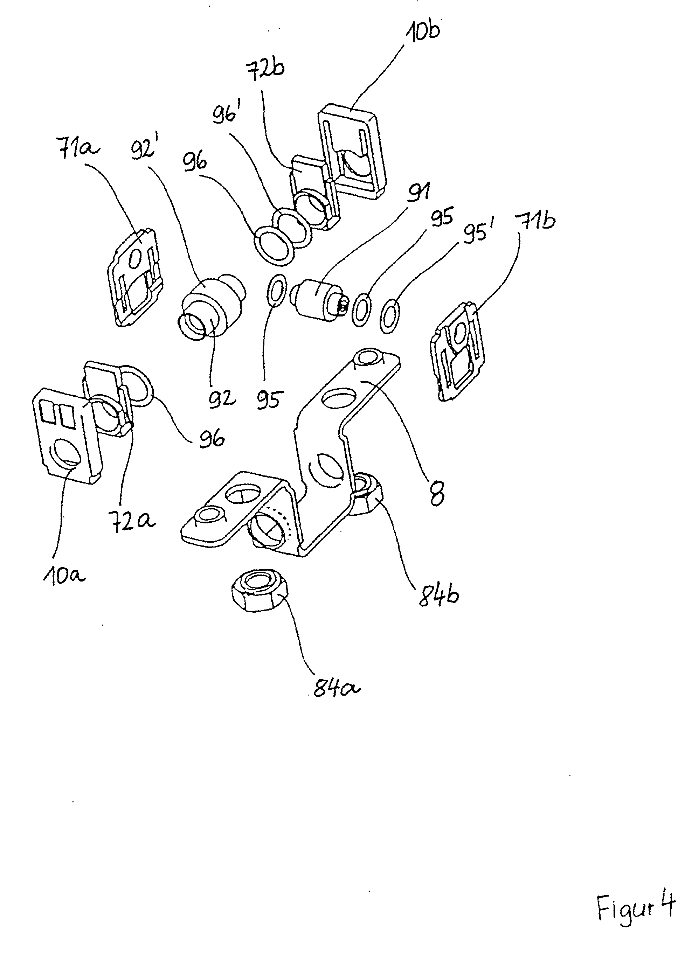

Wie aus der Figur 4 ersichtlich, besteht das Getriebe 9 aus einer Antriebsschnecke 91, die über die äußere Schneckenverzahnung 92' einer Spindelmutter 92 in Eingriff steht. Die Antriebsschnecke 91 ist über die Antriebswelle 21; 22 mit dem Antriebsmotor 2 verbunden (siehe hierzu Figur 1). Die Spindelmutter 92 ist über ihr Innengewinde der Gewindespindel 5 zugeordnet.

Zur Wirkungsweise der Vorrichtung: Dreht sich der Antriebsmotor 2, so überträgt er seine Bewegung über die Antriebswelle 21; 22 auf die Antriebsschnecke 91. Diese übermittelt ihre Drehbewegung auf die Spindelmutter 92. Da die Gewindespindel 5 drehfest ist, muß das Getriebe 9 und damit die mit dieser verbundene Oberschiene 3 einschließlich Kraftfahrzeugsitz eine translatorische Bewegung ausführen (siehe hierzu Figur 1 ).

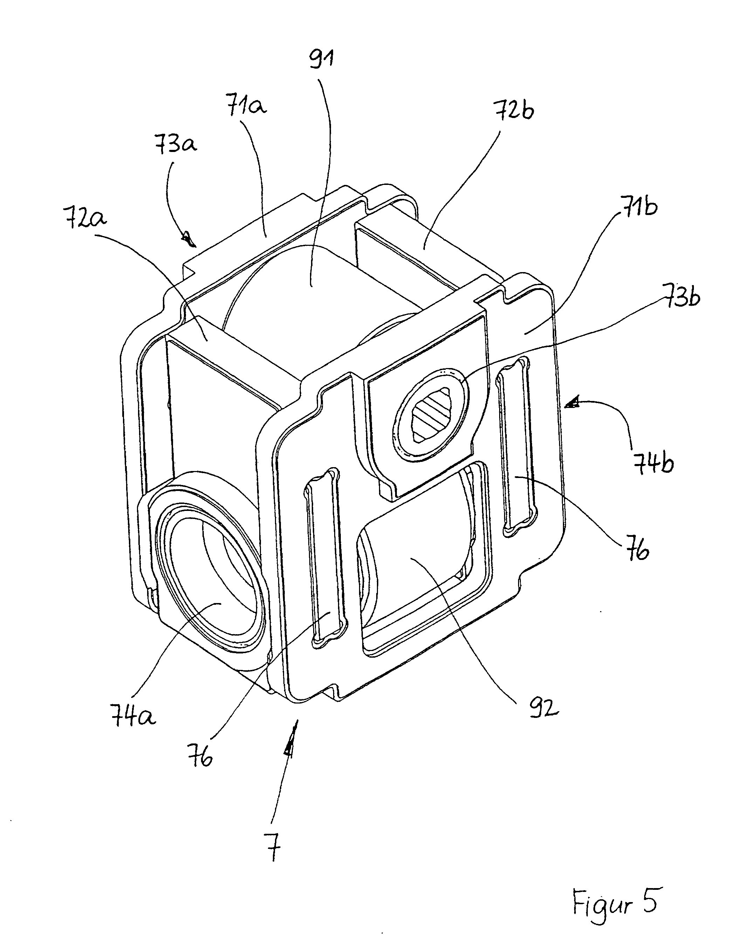

In der Figur 4 wird in einer Explosivdarstellung der Aufbau des Getriebes 9 gezeigt. Es ist zu sehen, daß die Getriebeelemente, bestehend aus einer Antriebsschnecke 91 und einer Spindelmutter 92 in den Gehäuseplatten 71 a; 71 b; 72a; 72b eines Getriebegehäuses 7 gelagert sind. In der Figur 5 ist das Getriebe 9 im zusammengebauten Zustand gezeigt. Es ist zu erkennen, daß die Antriebsschnecke 91 über Lagerbohrungen 73a und 73b in der Gehäuseplatte 71a und 71b gelagert ist, während die Spindelmutter 92 in Lagerbohrungen 74a und 74b der Gehäuseplatte 72a und 72b gelagert ist. Für die Axialanlauf der Spindelmutter 92 und der Antriebsschnecke 91 sind Scheiben 95 und 96 vorgesehen, zum Axialspielausgleich dienen Wellenscheiben 95'; 96'.

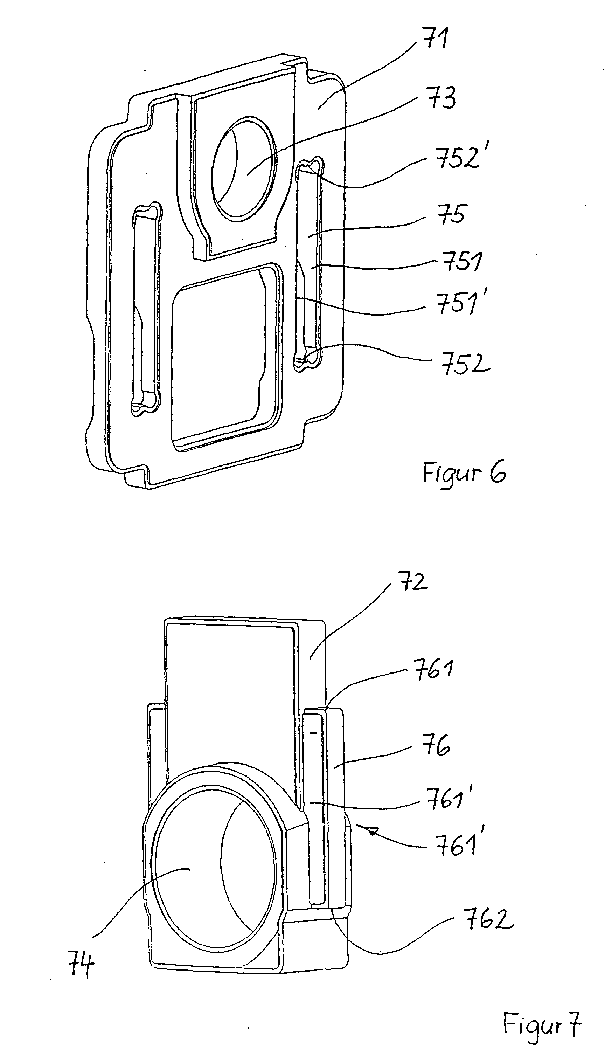

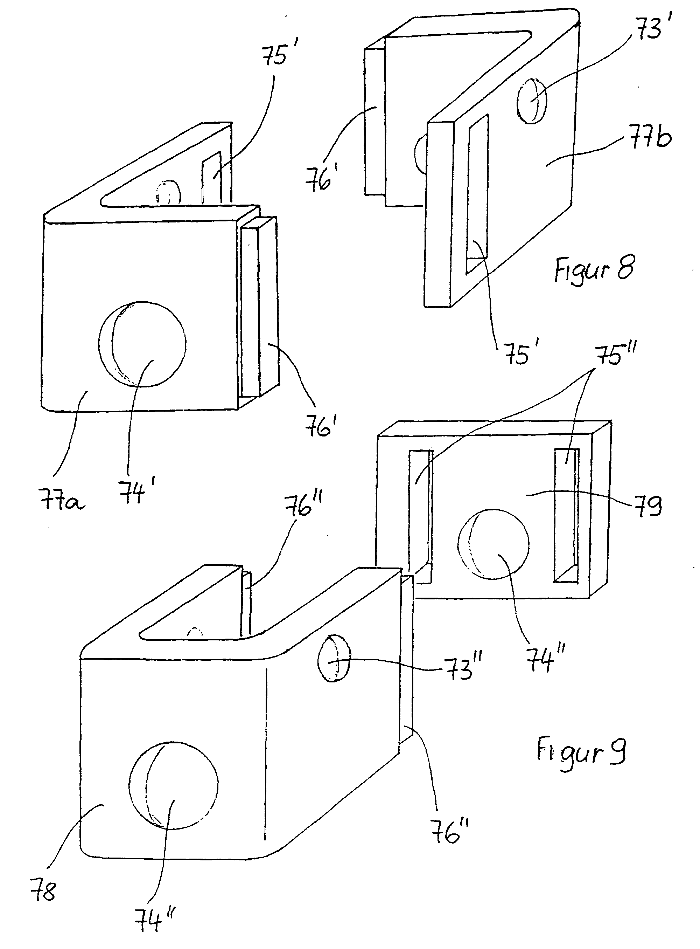

Aus den Figuren 6, 7, 8 und 9 ist ein möglicher Aufbau des erfindungsgemäßen Getriebegehäuses 7 ersichtlich. Wie in den Figuren 5 bis 7 erkennbar, besteht dieses hier aus je zwei sich gegenüberliegenden, scheibenförmigen Gehäuseplatten 71a; 71b; 72a; 72b, wobei die Gehäuseplatten in den Einzeldarstellung gemäß den Figuren 6 und 7 jeweils mit den Bezugszeichen 71 bzw. 72 versehen sind. Die Gehäuseplatten 71a; 71b; 72a; 72b sind vorzugsweise aus einem Sinterwerkstoff gefertigt; es sind aber auch andere Werkstoffe, wie Gußwerkstoffe, Stahl oder auch Kunststoff einsetzbar. Die Gehäuseplatten 71a; 71b; 72a; 72b sind auf ihre Endmaße gefertigt. Das betrifft auch die Lagerbohrungen 73a; 73b; 74a; 74b, deren Lage in den Gehäuseplatten 71a; 71b; 72a; 72b und auch deren Passungstoleranzen.

Die zusammengehörenden, sich gegenüberliegende Gehäuseplatten 71a; 71b und 72a; 72b sind in ihrer Gestalt identisch. Dabei weist ein Paar, im Ausführungsbeispiel sind es die Gehäuseplatten 72a; 72b als Stege 76 ausgebildete Bereiche auf, die an den Kanten der Gehäuseplatten 72a; 72b angeordnet sind, also sich entlang der Ebene der Gehäuseplatten 72a; 72b erstrecken. Die sich gegenüberliegenden Seiten 761; 761' der Stege 76 sind entweder parallel ausgebildet, verlaufen konisch oder besitzen Schaberippen.

In den Randbereichen der Gehäuseplatten 71a; 71b sind dazu korrespondierende, als durchgehende Öffnungen ausgebildete Ausnehmungen 75 quer zur Ebene der Gehäuseplatten 71a; 71b angeordnet. Diese Ausnehmungen 75 weisen zu den Seiten 761; 761' der Stege 76 parallele Flächen 752; 752' auf.

Andere mögliche Ausführungssformen der Gehäuseplatten werden in den Figuren 8 und 9 gezeigt. Dabei handelt es sich einmal um zwei L-förmige Gehäuseplatten 77a; 77b. Diese L-förmige Gehäuseplatte 77a; 77b tragen an einem ihrer Schenkel Stege 76', die analog des oben beschriebenen Ausführungsbeispieles mit Ausnehmungen 75' korrespondieren. Die entsprechenden Lagerbohrungen 73' : und 74' sind, wie bereits oben beschrieben, in die Gehäuseplatten eingebracht.

In der Figur 9 wird ein Getriebegehäuse gezeigt, das aus einer U-förmigen Gehäuseplatte 78 und einer dieser zugeordneten scheibenförmige Gehäuseplatte 79 besteht. Die Schenkel der U-förmige Gehäuseplatte 78 tragen ebenfalls Stege 76", die in entsprechende Ausnehmungen 75" der scheibenförmige Gehäuseplatte 79 eingreifen.

Zür Montage werden die Stege 76; 76'; 76" in die Ausnehmungen 75; 75'; 75" gesteckt. Die Maße der Ausnehmungen 75; 75'; 75" und Stege 76; 76'; 76" sind so aufeinander abgestimmt, daß nach Montageverfahren entweder Spielpassungen oder Preßpassungen gebildet werden können. Nach dem Zusammenstecken wird die Lage der Ausnehmungen 75 und der Stege 76 und damit die Lage der Antriebsschnecke 91 zur Spindelmutter 92 fixiert und damit endgültig festgelegt, indem das Material im Bereich der Steckverbindungen plastisch verformt wird.

Die Montage des Getriebegehäuses 7 kann durch automatische Abläufe unterstützt oder voll ersetzt werden. Das wird nun nachfolgend anhand scheibenförmiger Gehäuseplatten 71a; 71b; 72a; 72b erläutert. Die Montage der L-förmigen Gehäuseplatten 77 und U-förmigen Gehäuseplatten 78 bzw. 79 erfolgt analog. Hierzu werden die Gecriebeelemente (Antriebsschnekke 91, Spindelmutter 92; Scheiben 95; 96, Wellenscheiben 95'; 96') einschließlich des Gehäuses (Gehäuseplatten 71; 72) vormontiert. Das heißt, die Getriebeelemente werden in den dafür vorgesehenen Lagerbohrungen eingesteckt und die Gehäuseplatten 71;72 werden zusammengesteckt.

Dieses vormontierte Getriebe 9 wird nun in eine kombinierte Halte- und Verstemmeinrichtung eingelegt, die das Getriebe 9 an seiner Außenkontur erfaßt. Das Halten erfolgt in Richtung der Ebene der Gehäuseplatten 72a; 72b, wobei die Haltekräfte, die an den vier Ecken der Gehäuseplatte 71a oder 71b angreifen, relativ gering gehalten werden.

Das Getriebe 9 wird nunmehr bewegt, indem vorzugsweise die Antriebsschnecke 92 gedreht wird. Dabei muß mindestens eine Umdrehung erfolgen. Die Gehäuseplatten 71a; 71b; 72a; 72b können sich so verspannungsfrei ausrichten. Nach Vollzug dieser Bewegung werden die Haltekräfte verstärkt, so daß die Getriebeelemente 91; 92 und Gehäuseplatten 71a; 71b; 72a; 72b in dieser Lage gehalten werden und ein Verrutschen verhindert wird. Ein Stemmwerkzeug greift nun in den Bereich der Steckverbindungen, das heißt, in die Kontaktstellen zwischen den Stegen 76; 76' und 76" und den Ausnehmungen 75; 75' und 75" und verformt an diesen Stellen das Material plastisch. Die Verformung erfolgt so, daß dadurch das Material zum Beispiel Hinterschnitte bildet und so die Lage der Gehäuseplatten 71a; 71b; 72a; 72b zueinander endgültig fixiert werden.

Um eine Deformierung der Lagerbohrungen 74a; 74b der Spindelmutter 92 zu vermeiden, erfolgt die Verstemmung nicht über die gesamte Länge der Steckverbindungen. Es wird nur in dem Bereich eine Verstemmung durchgeführt, wo ein Einfluß der Kräfte auf den Lagerbereich der Spindelmutter 92 in der Gehäuseplatte 72 und damit einer Deformierung der Lagerbohrungen 74 ausgeschlossen werden kann.

Die Fixierung der Gehäuseplatten 71a; 71b; 72a; 72b kann auch dadurch erfolgen, daß das Material im Bereich der Steckverbindungen unter Einsatz der Lasertechnik verschweißt wird. Eine weitere Möglichkeit besteht darin, die Lage der Gehäuseplatten 71; 72 zueinander durch Vergießen des Materials im Bereich der Steckverbindungen zu fixieren.

Eine andere Ausgestaltung des Verfahrens besteht darin, daß die Umdrehung der Getriebeelemente zum Zwecke des Ausrichtens mit einer höheren Drehzahl erfolgt. Zweckmäßig ist es, mit der Nenndrehzahl oder mit einer über dieser liegenden Drehzahl des Getriebes zu arbeiten. Die dadurch entstehenden Kreiselkräfte halten während der Bewegung die Lage der Getriebeelemente 91; 92 zueinander stabil, so daß die Fixierung hier während der Bewegung erfolgen kann.

Die Lagerung der Gewindespindel 5 kann noch dahingehend weiter ausgestaltet werden, daß den Halterungen 6a; 6b (siehe Figur 2) der Gewindespindel 5 schwingungsdämpfende Buchsen (hier nicht dargestellt) oder ähnliche Bauelemente zugeordnet sind.

Selbstverständlich ist die Ausbildung der Steckverbindungen nicht auf die in den Figuren 5 bis 9 dargestellten Varianten beschränkt. So können die Steckverbindungen durch Stifte oder Bolzen gebildet werden, die an einem der zur verbindenden Gehäuseteile vorgesehen sind und die in eine entsprechende Ausnehmung des anderen Teiles eingreifen, oder durch eine Nut-Feder-Verbindung, wobei zur Herstellung eines Formschlusses bzw. eines allseitigen Kraftschlusses besonders eine Schwalbenschwanznut oder eine T-Nut geeignet sind, aber grundsätzlich auch eine U-förmige Nut oder dergleichen in Frage kommt. Ferner ist eine Vielzahl formschlüssiger Schlitzverbindungen denkbar.

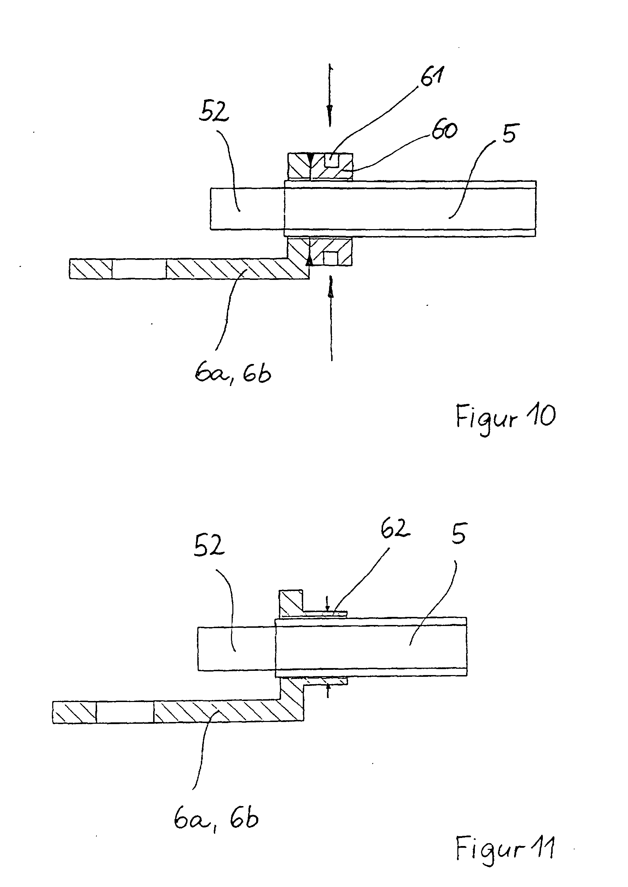

Eine Ausgestaltung der Erfindung besteht darin, die Lagerung der Gewindespindel 5 mit einer Notbetätigung auszustatten. Das ist erforderlich, um im Falle eines Defektes des Getriebes 9 das Herausdrehen der Gewindespindel 5 zu ermöglichen. Dadurch kann der Kraftfahrzeugsitz auch in diesem Falle bewegt werden, was für dessen Ausbau erforderlich ist, da die Verschraubung der Halterung 6a; 6b mit der Unterschiene 4 durch die Oberschiene 3 verdeckt sein können. Will man die Verschraubung lösen, muß daher die Oberschiene 3 zur Unterschiene 4 verfahren werden. Hierzu ist vorgesehen, die Lagerung der Gewindespindel an mindestens einer Halterung 6a; 6b mit einer Sollbruchstelle auszustatten und die Gewindespindel 5 an mindestens einem Ende mit einen Formschlußelement 52 zu versehen, das im Einsatzfall mit einem Werkzeug erfaßt und gedreht werden kann. In den Figuren 10 bis 17 werden derartige Ausführungen gezeigt.

In der Figur 10 wird eine Ausführung gezeigt, bei der beispielsweise ein Gewindeelement 60 eingesetzt wird, das an seinem Umfang eine Materialschwächung als umlaufende Nut 61 aufweist. Es sind aber auch andere Materialschwächungen möglich, wie z.B. Einkerbungen o.ä. Das Gewindeelement 60 ist mit einer der Halterungen 6a; 6b verschweißt. Um eine Sollbruchstelle auszubilden, wird im Bereich der Nut 61 das Material mit der Gewindespindel 5 verquetscht. Das erfolgt an zwei sich gegenüberliegenden Angriffspunkten (siehe Pfeile), wobei eine einseitige Quetschung auch möglich ist. Im Falle der Notbetätigung wird die Gewindespindel 5 verdreht und so die Haltekraft der Quetschung überwunden.

Als Gewindeelemente 60 sind zum Beispiel Schweiß-, Stanz- oder Blechmuttern einsetzbar, die stoff- bzw. kraftschlüssige Verbindungen mit dem Material eingehen.

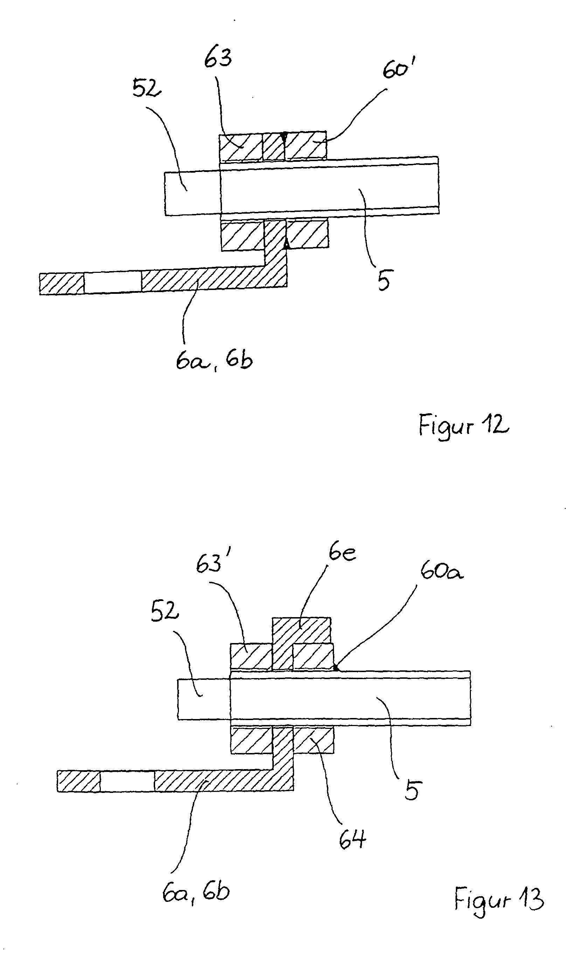

In Figur 11 wird eine einfache Variante gezeigt. Hier wird anstatt eines Gewindeelementes 60 ein Durchzug 62 in der Halterung 6a; 6b hergestellt, der mit einem Gewinde zur Aufme der Gewindespindel 5 versehen wird. Der Durchzug 62 wird mit der Gewindespindel 5 verquetscht (siehe Pfeile).

Figur 12 zeigt eine Lösung, bei der analog zu der in Figur 10 gezeigten Variante ein Gewindeelement 60' mit der Halterung 5a; 5b verschweißt ist. Dieses Gewindeelement 60' wird durch eine Kontermutter 63 verspannt. Im Falle der Notbetätigung kann die Kontermutter 63 gelöst und so die Gewindespindel 5 gedreht werden.

In Figur 13 wird eine ähnliche Lösung gezeigt. Eine Mutter 64 wird jedoch hier nicht mit der Halterung 6a; 6b verschweißt, sondern formschlüssig über einen Anschlag 6e gehalten, der an der Halterung 6a; 6b angebracht ist. Die Verspannung erfolgt ebenfalls über eine Kontermutter 63. Als Sollbruchstelle ist hier mindestens ein Schweißpunkt 60a zwischen der Mutter 64 und der Gewindespindel 5 vorgesehen.

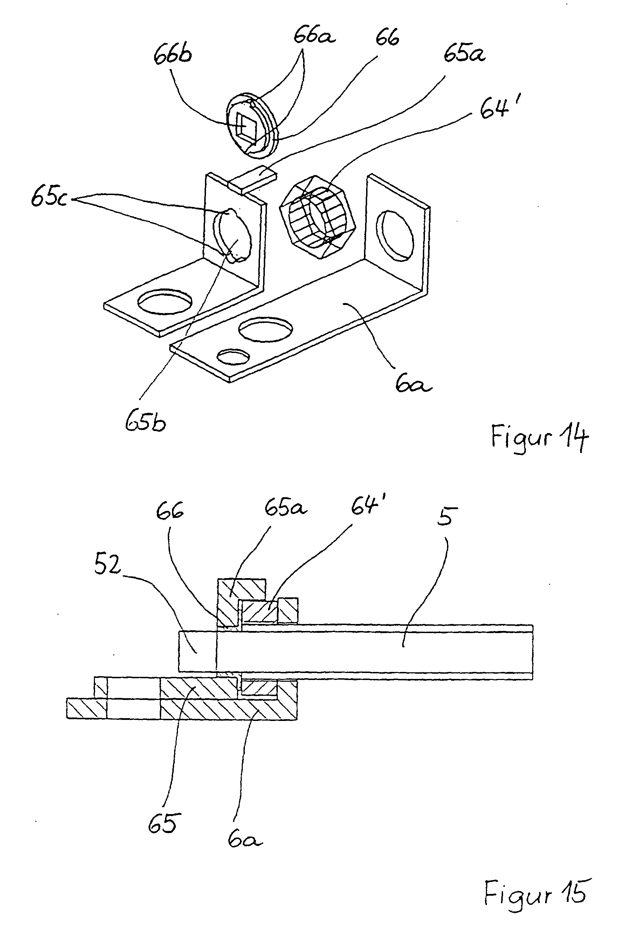

Die Figuren 14 und 15 zeigen eine Lösung, bei der ein Sicherungsblech 65 angeordnet ist, das eine Lasche 65a aufweist, die eine zwischen der Halterung 6a und dem Sicherungsblech 65 angeordnete Mutter 64' in ihrer Lage sichert. Als Sollbruchstelle wird hier eine vorzugsweise aus Kunststoff hergestellte Verdrehsicherung 66 eingesetzt. Diese wird mit ihrer Außenkontur formschlüssig in eine Gewindespindel-Aufnahmebohrung 65b des Sicherungsbleches 65 eingelegt. Der Formschluß wird hier durch mindestens ein am Umfang der Verdrehsicherung 66 angeformtes Formschlußelement 66a erreicht, das mit einer entsprechenden Aussparung 65c in der Gewindespindel-Aufnahmebohrung 65b korrespondiert. Die Verdrehsicherung 66a ist mit der Gewindespindel 5 drehfest verbunden, indem ein am Ende der Gewindespindel 5 angebrachtes Vierkant bzw. ein geometrisch anders ausgebildetes Element in der dazu korrespondierende Innenkontur 66b der Verdrehsicherung greift.

Im Falle der Notbetätigung wird die Gewindespindel 5 einschließlich der Verdrehsicherung 66 verdreht, was zur Zerstörung der Verdrehsicherung 66 führt. Damit kann die Gewindespindel 5 bewegt werden.

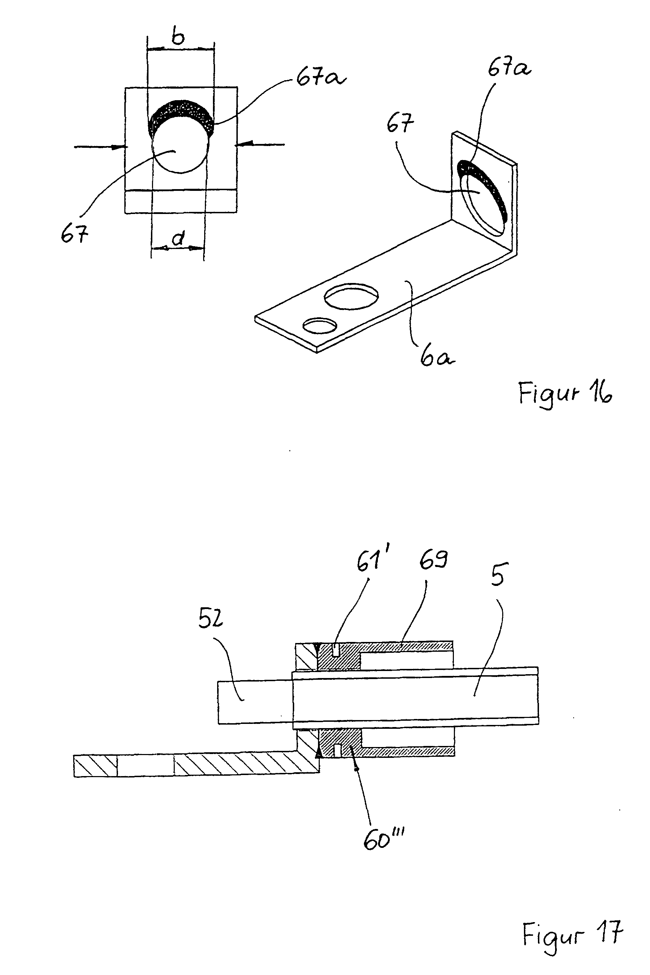

Figur 16 zeigt eine andere Einsatzmöglichkeit für ein Verdrehsicherungselement aus Kunststoff. Hier wird in eine Gewindespindel-Aufnahmeöffnung beider Halterungen 6a; 6b eine Kunststoffsicherung 67a eingeformt, derart, daß der kreisrunde Querschnitt der Aufnahmeöffnung 67 erhalten bleibt, die Breite b der Kunststoffsicherung jedoch größer als der Durchmesser d der Aufnahmeöffnung 67 ist. Die Quetschung und damit die Ausbildung der Sollbruchstelle erfolgt durch Kräfte in Richtung der Pfeile. Dadurch wird die Möglichkeit geschaffen, daß die Gewindespindel 5 sowohl Zug- und Druckkräfte übertragen kann als auch gegen Verdrehen gesichert ist.

Im Falle der Notbetätigung wird die Kunststoffsicherung 67a herausgeschlagen, so daß die Gewindespindel 5 in den freiwerdenden Raum ausweichen kann oder, falls erforderlich, mit Hilfe eines hier nicht dargestellten Werkzeuges in diesen Raum gedrückt werden kann. Damit liegt die Gewindespindel 5 frei und der Kraftfahrzeugsitz ist entnehmbar, ohne daß die Gewindespindel 5 gedreht werden muß.

In der Figur 17 wird eine Spezialquetschmutter 68 gezeigt, die analog zu dem anhand der Figur 10 beschriebenen Beispiel mit einer Halterung 6a; 6b verschweißt ist und eine umlaufende Nut 61' als Materialschwächung aufweist. Die Verquetschung auf der Gewindespindel 5 und die Notbetätigung erfolgen analog zu dem in Fig. 10 gezeigten Beispiel. In diesem Beispiel ist jedoch auf der von den Halterungen 6a; 6b abgewandten Seite auf die Spezialquebschmutter 68 eine Distanzbuchse 69 angeordnet, die den Verfahrweg der Oberschiene 3 auf der Unterschiene 4 begrenzt. Ein variabler Endanschlag kann zum Beispiel auch über hier nicht darstellte Kunststoffclips erreicht werden, die bei der Montage des Kraftfahrzeugsitzes separat auf der Gewindespindel befestigt werden.

Um die oben beschriebene Notbetätigung ausführen zu können, muß (mit Ausnahme des zu Figur 16 beschriebenen Beispiels) zum Verdrehen der Gewindespindel 5 deren Ende mit einem Werkzeug erfaßt werden. Hierzu muß das Ende der Gewindespindel 5 mit einen entsprechend ausgebildeten Formschlußelement 52 versehen sein. Das kann zum Beispiel erfolgen, indem dieses einseitig oder zweiseitig abgeflacht ist oder indem ein Innen- oder Außenmehrkant, vorzugsweise ein Vierkant, vorgesehen ist.

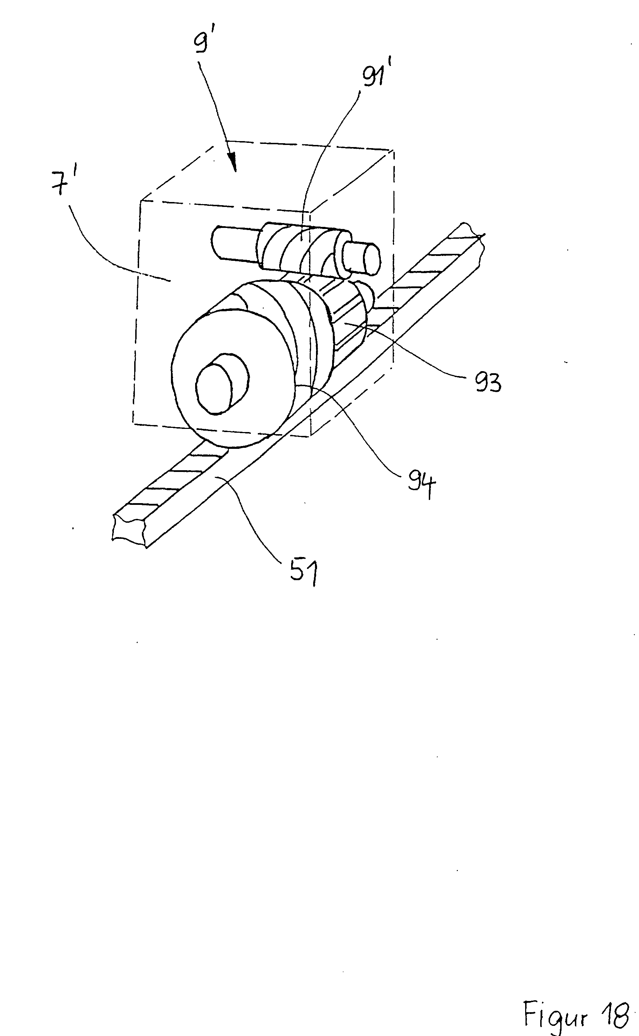

Der Einsatz des oben beschriebenen erfindungsgemäßen Getriebes ist nicht nur auf die Betätigung einer Gewindespindel 5 beschränkt. Der Einsatz einer Zahnstange ist ebenfalls möglich. Figur 18 zeigt schematisch die Anordnung einer derartigen Einrichtung, die innerhalb des erfindungsgemäßen Getriebegehäuses 7 angeordnet ist. Dabei kämmt die Antriebsschnecke 91' mit einem Schneckenrad 93, daß axial mit einer Schnecke 94 fest verbunden ist. Die Schnecke 94 ist mit der Verzahnung einer Zahnstange 51 in Eingriff.

Durch die Drehbewegung des hier nicht dargestellten Antriebsmotors wird eine Drehbewegung auf die Antriebsschnekke 91' übertragen. Diese bewegt das Schneckenrad 93 und somit die Schnecke 94, was zu einer Relativbewegung zwischen der Zahnstange 51 und dem Getriebe führt. Mit dieser Einrichtung kann ebenfalls eine Sitzverstelleinrichtung bzw. ein Fensterheber oder auch andere Verstelleinrichtung in einem Kraftfahrzeug betrieben werden.

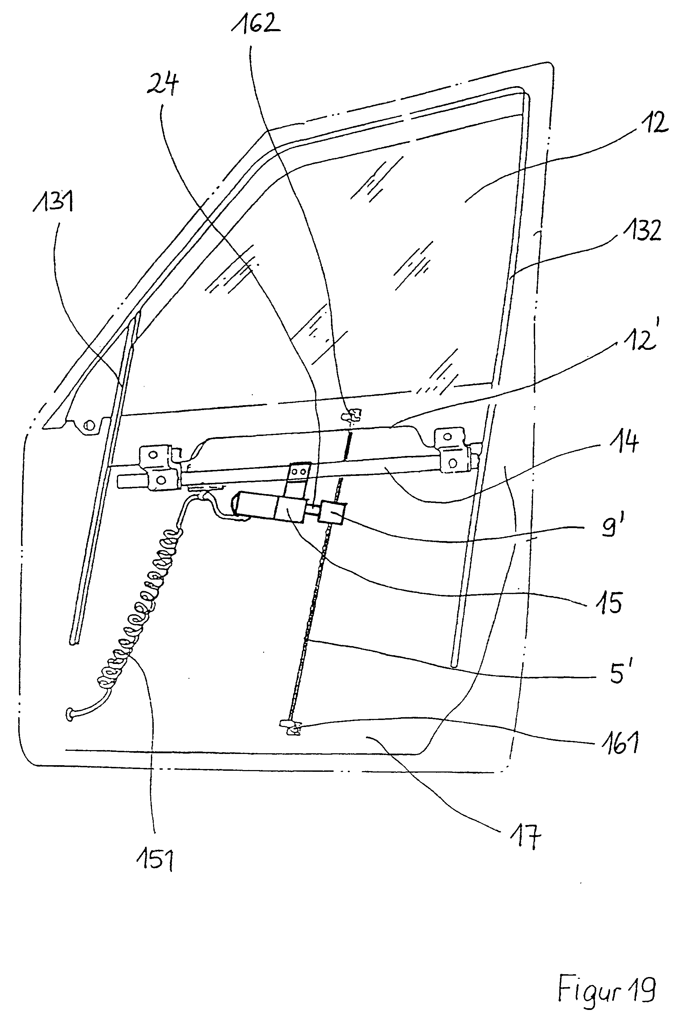

In der Figur 19 wird eine Prinzipskizze gezeigt, aus der man eine Möglichkeit für den Einsatz der Erfindung zum Antrieb eines Fensterhebers an einer Fahrzeugtür entnehmen kann. Wie in der Figur 19 zu sehen, wird eine Fensterscheibe 12 zwischen zwei Führungsschienen 131; 132 gehalten, die an je einer Seite der Fahrzeugtür angeordnet sind. An der Unterkante 12' der Fensterscheibe 12 ist über eine Halteschiene 14 ein Fensterhebermotor 15 angeordnet, der über ein Kabel mit Strom versorgt wird. Die Antriebswelle 23 des Fensterhebermotors 15 ist mit dem Getriebe 9 verbunden. Der Aufbau des Getriebes 9 wurde bereits anhand der Figur 4 näher beschrieben. Das heißt, innerhalb des Getriebegehäuses 7 befindet sich eine hier nicht dargestellte Antriebsschnecke, die über eine Spindelmutter mit der einer Gewindespindel 5' im Eingriff steht. Die Gewindespindel 5 ist über Haltewinkel 161; 162 drehfest am Türinnenblech 17 befestigt. Dabei muß die Achse der Gewindespindel 5 in Richtung der Bewegungsrichtung der Fensterscheibe 12 zeigen.

Dreht sich der Fensterhebermotor 15, so wird über die hier nicht dargestellte Antriebsschnecke die Spindelmutter gedreht. Da die Gewindespindel 5' drehfest ist, muß sich die miteinander fest verbundene Einheit aus Getriebe 9, Fensterhebermotor 15 und Fensterscheibe 12 entlang der Achse der Gewindespindel 5' bewegen. Dabei wird die Fensterscheibe 12 in den Führungsschienen 131; 132 geführt.

Die Anwendung der Erfindung beschränkt sich nicht auf die oben beschriebenen Beispiele für die Betätigung der Sitzlängsverstellung und des Fensterheberantriebs. Es ist weiterhin möglich, die Erfindung für Spindel- oder Schnekkenantriebe zum Verstellen der Sitzhöhe, der Sitzneigung, der Sitzkissentiefenverstellung, der Sitzlehnenverstellung und der Verstellung der Kopfstütze einzusetzen.

### Bezugszeichenliste

- 1: Halteplatte
- 10a; 10b: Entkopplungselement
- 11a; 11b: Befestigungslaschen
- 12: Fensterscheibe
- 12: Unterkante der Fensterscheibe
- 131; 132: Führungsschienen
- 14: Halteschienen
- 15: Fensterhebermotor
- 151: Kabel
- 161; 162: Haltewinkel
- 2: Antriebsmotor
- 21; 22: Antriebswelle
- 24: Antriebswelle
- 3: Oberschiene
- 30: Befestigungsöffnung
- 31: Hohlraum
- 4: Unterschiene
- 5; 5': Gewindesoindel
- 51: Zahnstange
- 52: Formschlußelement
- 60; 60': Gewindeelement
- 60a: Schweißpunkt
- 61: Nut
- 62: Durchzug
- 63; 63': Kontermutter
- 64; 64': Mutter
- 65: Sicherungsblech
- 65a: Lasche
- 65b: Gewindespindel-Aufnahmebohrung
- 65c: Aussparung
- 66: Verdrehsicherung
- 66a: Formschlußelement
- 66b: Innenkontur der Verdrehsicherung
- 67: Gewindespindel-Aufnahmeöffnung
- 67a: Kunststoffsicherung
- 68: Spezialquetschmutter
- 6a; 6b: Halterungen
- 6c; 6d; 6c'; 6d': Befestigungsmutter
- 6e: Anschlag
- 7; 7': Getriebegehäuse
- 71a; 71b: Gehäuseplatten
- 72a; 72b: Gehäuseplatten
- 73a; 73b: Lagerbohrungen
- 74a; 74b: Lagerbohrungen
- 75; 75'; 75": Ausnehmungen
- 76; 76'; 76": Stege
- 761; 762: Stege
- 77: L-förmige Gehäuseplatte
- 78: U-förmige Gehäuseplatte
- 79: scheibenförmige Gehäuseplatte
- 8: Halterung
- 81: Getriebeaufnahme
- 82a; 82b: Schenkel der Halterung
- 83: Befestigungsöffnungen
- 84: Mutter
- 85: Winkelbereiche
- 86a; 86b: Schenkel der Getriebeaufnahme
- 87a; 87b: Sollverformungsstellen
- 9; 9': Getriebe
- 91: Antriebsschnecke
- 92: Spindelmutter
- 92': Schneckenradverzahnung
- 93: Schneckenrad
- 94: Schnecke
- 95; 95'; 96; 96': Wellenring

## Patentansprüche

1. Spindel- oder Schneckenantrieb für Verstelleinrichtungen in Kraftfahrzeugen, insbesondere für Sitzverstelleinrichtungen, Fensterheber und Schiebedächer, mit einer feststehenden Spindel (5) oder einer feststehenden Zahnstange (51), die an einem ersten von zwei relativ zueinander verstellbaren Teile befestigt ist, mit einem Getriebe (9, 9'), das am zweiten der relativ zueinander verstellbaren Teile angeordnet ist, und mit einem Getriebegehäuse (7) zur Aufnahme des Getriebes, wobei das Getriebegehäuse (7) aus wenigstens zwei mittels Steckverbindungen aneinander befestigbaren Gehäuseplatten (71; 72; 71a; 71b; 72a; 72b; 77a; 77b; 78; 79) besteht,
**dadurch gekennzeichnet,**
**daß** mittels der Steckverbindungen die Lage der Gehäuseplatten (71; 72; 71a; 71b; 72a; 72b; 77a; 77b; 78; 79) zueinander in allen Raumrichtungen fixiert ist und daß die Steckverbindungen gleichzeitig als tragende, die Getriebekräfte aufnehmende Verbindungsstellen ausgebildet sind.

2. Antrieb nach Anspruch 1, **dadurch gekennzeichnet, daß** die Gehäuseplatten (71; 72; 71a; 71b; 72a; 72b; 77a; 77b; 78; 79) ausschließlich an den Steckverbindungen aneinander befestigt sind.

3. Antrieb nach Anspruch 1 oder 2, **dadurch gekennzeichnet, daß** das Getriebegehäuse (7) aus zwei L-förmigen Gehäuseplatten (77a; 77b) besteht.

4. Antrieb nach Anspruch 1 oder 2, **dadurch gekennzeichnet, daß** das Getriebegehäuse (7) aus wenigstens zwei Paaren einander gegenüberliegender scheibenförmiger Gehäuseplatten (71a; 71b; 72a; 72b) besteht, wobei die einander paarweise zugeordneten Gehäuseplatten (71a; 71b; 72a; 72b) vorzugsweise identisch ausgebildet sind.

5. Antrieb nach Anspruch 1 oder 2, **dadurch gekennzeichnet, daß** das Getriebegehäuse (7) aus einer U-förmigen (78) und einer scheibenförmigen Gehäuseplatte (79) besteht.

6. Antrieb nach einem der voranstehenden Ansprüche, **dadurch gekennzeichnet, daß** sich die erhabenen Bereiche (76; 76'; 76") der Steckverbindungen entlang der Ebene der Gehäuseplatten (72; 72a; 72b; 77; 78) und die zugeordneten Ausnehmungen (75; 75'; 75") quer zur Ebene der Gehäuseplatten (72; 72a; 72b; 77; 78) erstrecken.

7. Antrieb nach Anspruch 6, **dadurch gekennzeichnet, daß** die Ausnehmungen als durchgehende Öffnungen (75; 75'; 75") ausgebildet sind.

8. Antrieb nach Anspruch 6, **dadurch gekennzeichnet, daß** die erhabenen Bereiche als Stege (76; 76'; 76") ausgebildet sind.

9. Antrieb nach einem der Ansprüche 6 bis 8, **dadurch gekennzeichnet, daß** die erhabenen Bereiche (76; 76'; 76") der Steckverbindungen in Montagerichtung parallele Flächen (761; 762; 761'; 762') aufweisen, denen paßgenaue Ausnehmungen (75; 75' ; 75") mit ebenfalls in Montagerichtung parallelen Flächen (751; 752; 751'; 752') zugeordnet sind.

10. Antrieb nach einem der Ansprüche 6 bis 8, **dadurch gekennzeichnet, daß** die erhabenen Bereiche (76; 76'; 76") der Steckverbindungen in Montagerichtung konisch verlaufende Flächen aufweisen, denen Ausnehmungen (75; 75'; 75'') mit gegebenenfalls in Montagerichtung parallelen Flächen (751; 752) zugeordnet sind, so daß bei der Montage eine Preßpassung gebildet wird.

11. Antrieb nach einem der Ansprüche 6 bis 8, **dadurch gekennzeichnet, daß** die erhabenen Bereiche (76; 76'; 76") der Steckverbindungen mit den Ausnehmungen (75; 75'; 75") zunächst eine Spielpassung bilden und daß die Fixierung der Gehäuseplatten (72a; 72b; 77; 78) durch plastisches Verformen des Materials im Bereich der Steckverbindungen erfolgt.

12. Antrieb nach einem der voranstehenden Ansprüche, **dadurch gekennzeichnet, daß** die Gehäuseplatten (72a; 72b; 77; 78) aus einem Sinterwerkstoff, einem Gußwerkstoff, Stahl oder Kunststoff gefertigt sind.

13. Antrieb nach einem der voranstehenden Ansprüche, **dadurch gekennzeichnet, daß** zumindest ein Teil der Lagerstellen (73; 73a; 73b; 74; 74'; 74"; 74a; 74b) der Getriebeelemente (91; 91'; 92; 93; 94) in die Gehäuseplatten (72a; 72b; 77; 78) integriert sind.

14. Antrieb nach einem der voranstehenden Ansprüche, **dadurch gekennzeichnet, daß** das Getriebe (9) aus einer Gewindespindel (5), einer Spindelmutter (92) mit einer äußeren Schneckenradverzahnung (92) und einer damit im Eingriff stehenden Antriebsschnecke (91) besteht.

15. Antrieb nach einem der voranstehenden Ansprüche, **dadurch gekennzeichnet, daß** das Getriebe (9) aus einer Zahnstange (51), einer dieser zugeordneten Schnecke (94) mit Schneckenrad (93) und einer Antriebsschnecke (91') besteht, wobei die Schnecke (94) mit dem Schnekkenrad (93) auf einer Achse liegt und mit diesem fest verbunden ist.

16. Antrieb nach einem der voranstehenden Ansprüche, **dadurch gekennzeichnet, daß** die Gewindespindel (5) im Hohlraum (31) einer kastenprofilartigen Führungsschiene (3; 4) einer Sitzlängenverstellung angeordnet ist, wobei die Gewindespindel (5) über ihre Enden an der fahrzeugfesten Unterschiene (4) und das Getriebegehäuse (7) an der dazu verschiebbaren Oberschiene (3) befestigt ist.

17. Antrieb nach Anspruch 16, **dadurch gekennzeichnet, daß** das Getriebegehäuse (7) in einer U-förmigen Getriebeaufnahme (81) einer Halterung (8) lagert, dessen Schenkel (82a; 82b) zur Befestigung des Getriebes (9) an der Oberschiene (3) vorgesehen sind.

18. Antrieb nach Anspruch 16 und 17, **dadurch gekennzeichnet, daß** sich die Schenkel (82a; 82b) der Halterung (8) über die gesamte Länge der Oberschiene (3) erstrecken und Befestigungsöffnungen (83) tragen, denen Befestigungsöffnungen (30) der Oberschiene (3) zugeordnet sind, so daß die Halterung (8) mit der Oberschiene (3) verbindbar ist und diese versteift.

19. Antrieb nach Anspruch 16 bis 18, **dadurch gekennzeichnet, daß** die Befestigungsöffnungen (83) die Halterung (8') als innengewindetragende Befestigungselemente (84), vorzugsweise in Form von Durchzügen, ausgebildet sind, die in den Hohlraum (31) ragen.

20. Antrieb nach Anspruch 16 bis 19, **dadurch gekennzeichnet, daß** das Getriebe (9) komplett vormontiert und in der Halterung (8') eingebaut in den Hohlraum (31) der Schienenführung (3; 4) einschiebbar und über die Befestigungsöffnungen (83) mit der Oberschiene (3) verschraubbar ist.

21. Antrieb nach einem der Ansprüche 16 bis 20, **dadurch gekennzeichnet, daß** die Endbereiche (85a; 85b) der Halterung (8') abgewinkelt und derart ausgebildet sind, daß diese den freien Querschnitt der Oberschiene (3) und/ oder der Unterschiene (4) weitestgehend ausfüllen.

22. Antrieb nach einem der voranstehenden Ansprüche, **dadurch gekennzeichnet, daß** zur Geräuschentkopplung und zum Toleranzausgleich zwischen dem Getriebe (9) und den Schenkeln (86a; 86b) der Getriebeaufnahme (81) der Halterung (8) Entkopplungselemente (10a; 10b) aus Gummi oder Kunststoff angeordnet sind.

23. Antrieb nach einem der voranstehenden Ansprüche, **dadurch gekennzeichnet, daß** zwischen den Schenkeln (86a; 86b) der Getriebeaufnahme (81) und den Schenkeln (82a; 82b) der Halterung (8') Sollverformungsstellen (87a; 87b) ausgebildet sind, so daß beim Überschreiten einer vorgegebenen maximalen Grenzbelastung die Schenkel (86a; 86b) seitwärts schwenken und die Gewindespindel (5) verklemmen.

24. Antrieb nach einem der voranstehenden Ansprüche, **dadurch gekennzeichnet, daß** zur Geräuschentkopplung die Enden der Gewindespindel (5) in schwingungsdämpfenden Buchsen oder dergleichen gelagert sind.

25. Antrieb nach einem der voranstehenden Ansprüche, **dadurch gekennzeichnet, daß** für einen Fensterheber die Gewindespindel (5') so in der Kraftfahrzeugtür befestigt ist, daß die Gewindespindel (5') in die Bewegungsrichtung der Fensterscheibe (12) weist, und daß das mit der Gewindespindel (5') in Verbindung stehende Getriebe (9') direkt oder indirekt mit der Unterkante (12) der Fensterscheibe (12) verbunden ist.

26. Antrieb nach einem der voranstehenden Ansprüche, **dadurch gekennzeichnet, daß** der Spindel- oder Schneckenantrieb Bestandteil einer Verstelleinrichtung für die Sitzhöhe, die Sitzneigung, die Sitzkissentiefe, die Kopfstütze und/oder die Lehne ist.

27. Verfahren zur Montage eines Getriebegehäuses für einen Spindel- oder Schneckenantrieb nach einem der voranstehenden Ansprüche, bei dem
a) die Getriebeelemente (91; 92; 93; 94) und Gehäuseplatten (72a; 72b; 77; 78) komplett vormontiert werden, wobei die Gehäuseplatten (72a; 72b; 77; 78) zusammengesteckt werden und die Steckverbindungen als tragende, die Getriebekräfte aufnehmende Verbindungsstellen ausgebildet sind,
b) die Getriebeelemente (91; 92; 93; 94) und Gehäuseplatten (72a; 72b; 77; 78) in eine Vorrichtung eingelegt werden, die das Gehäuse (7) an seiner Außenkontur mit hinreichend geringen Haltekräften erfaßt, so daß sich die Gehäuseplatten (72a; 72b; 77; 78) beim Drehen der Getriebeelemente (91; 92; 93; 94) ausrichten können,
c) die Getriebeelemente (91; 92; 93; 94) zum Zwecke des Ausrichtens der Lagerstellen (73a; 73b; 74a; 74b) der Getriebeelemente, die an den Gehäuseplatten (72a; 72b; 77; 78) vorgesehen sind, gedreht werden, und
d) nach dem Ausrichten durch Erhöhung der Haltekräfte die Lage der Getriebeelemente (91; 92; 93; 94) und Gehäuseplatten (72a; 72b; 77; 78) zueinander festgehalten wird und die Lage der Gehäuseplatten in allen Raumrichtungen durch Einwirkung auf die Steckverbindungen dauerhaft fixiert wird.

28. Verfahren zur Montage eines Getriebegehäuses für den Spindel- oder Schneckenantrieb nach Anspruch 27, **dadurch gekennzeichnet, daß** die Getriebeelemente (91; 92; 93; 94) um wenigstens 360° gedreht, danach in dieser Lage gehalten und fixiert werden.

29. Verfahren zur Montage eines Getriebegehäuses für den Spindel- oder Schneckenantrieb nach Anspruch 27, **dadurch gekennzeichnet, daß** die Getriebeelemente (91; 92; 93; 94) mit einer Drehzahl angetrieben werden, die über der Nenndrehzahl des Getriebes (9) liegt, und während der Rotation der Getriebeelemente (91; 92; 93; 94) die Lage der Gehäuseplatten (72a; 72b; 77; 78) zueinander fixiert werden.

30. Verfahren zur Montage eines Getriebegehäuses für den Spindel- oder Schneckenantrieb nach Anspruch 27, **dadurch gekennzeichnet, daß** die Fixierung der Gehäuseplatten (72a; 72b; 77; 78) durch Verstemmen des Materials im Bereich der Steckverbindungen, aber außerhalb des Bereichs der Lagerbohrungen (74a; 74b) für die Spindelmutter (92) erfolgt.

31. Verfahren zur Montage eines Getriebegehäuses für den Spindel- oder Schneckenantrieb nach Anspruch 27, **dadurch gekennzeichnet, daß** die Fixierung der Gehäuseplatten (72a; 72b; 77; 78) durch Laserschweißen oder durch Vergießen der Steckverbindungen erfolgt.

32. Verfahren zur Montage eines Getriebegehäuses für den Spindel- oder Schneckenantrieb nach Anspruch 27, **dadurch gekennzeichnet, daß** die Fixierung der Gehäuseplatten (72a; 72b; 77; 78) durch Kleben der Steckverbindungen erfolgt.

33. Verfahren zur Montage eines Getriebegehäuses für den Spindel- oder Schneckenantrieb nach Anspruch 27, **dadurch gekennzeichnet, daß** das Halten der Außenkontur der Gehäuseplatten (72a; 72b; 77; 78), das Drehen der Getriebeelemente (91; 92; 93; 94) und das Verstemmen der Steckverbindungen in einer kombinierten Montagevorrichtung erfolgt.

34. Spindelantrieb nach einem der Ansprüche 1 bis 26, **dadurch gekennzeichnet, daß** eine Gewindespindel (5) drehfest zwischen zwei endseitigen Halterungen (5a; 5b) eingespannt ist, wobei der Gewindespindel eine in einem Getriebe angeordnete Spindelmutter zugeordnet ist, daß die Gewindespindel (5) über mindestens eine Sollbruchstelle in mindestens einer Halterung (5a; 6b) befestigt ist und daß mindestens ein Ende der Gewindespindel (5) als Formschlußelement (66a) ausgebildet ist, das mit einem drehenden Werkzeug verbunden werden kann, um die Sollbruchstelle zum Zwecke der Notbetätigung des Antriebs zu überwinden.

35. Spindelantrieb nach Anspruch 34, **dadurch gekennzeichnet, daß** ein Gewindeelement (60), das als örtliche Materialschwächung eine Nut (61) aufweist, mit einer der Halterungen (6a; 6b) verschweißt ist und das Gewindeelement (60) über diese Materialschwächung mit der Gewindespindel (5) verquetscht ist.

36. Spindelantrieb nach Anspruch 34, **dadurch gekennzeichnet, daß** das Gewindeelement (60''') auf der von der Halterung (6a; 6b) abgewandten Seite zur Begrenzung des Verfahrweges der Oberschiene (3) auf der Unterschiene (4) eine Distanzbuchse (69) aufweist.

37. Spindelantrieb nach Anspruch 34, **dadurch gekennzeichnet, daß** zur Aufnahme der Gewindespindel (5) eine der Halterungen (6a; 6b) einen Durchzug (62) aufweist, der an mindestens einer Stelle mit der Gewindespindel (5) verquetscht ist.

38. Spindelantrieb nach Anspruch 34, **dadurch gekennzeichnet, daß** ein Gewindeelement (60) mit einer der Halterungen (6a; 6b) verschweißt ist und dieser zum Fixieren der Lage der Gewindespindel (5) eine Kontermutter (63) zugeordnet ist.

39. Spindelantrieb nach Anspruch 34, **dadurch gekennzeichnet, daß** eine Mutter (64), die formschlüssig über einen Anschlag (6e) an einer der Halterungen (6a; 6b) in verdrehsicher gehalten wird, mit der Gewindespindel (5) an mindestens einer Stelle derart verschweißt ist, daß die Schweißstelle (60a) als Sollbruchstelle ausgebildet ist.

40. Spindelantrieb nach Anspruch 34, **dadurch gekennzeichnet, daß** eine vorzugsweise aus Kunststoff gefertigte, auf der Gewindespindel (5) drehfest angeordnete Verdrehsicherung (66) formschlüssig in eine Gewindespindel-Aufnahmebohrung (65b) eines Sicherungsbleches (65) eingelegt ist, wobei die Verdrehsicherung (66) bei der Notbetätigung der Gewindespindel (5) zerstört wird.

41. Spindelantrieb nach Anspruch 34, **dadurch gekennzeichnet, daß** das Sicherungsblech (65) über eine Lasche (65a) die Stellung einer auf der Gewindespindel (5) angeordneten, die Lage der Gewindespindel (5) sichernden Mutter (64') fixiert.

42. Spindelantrieb nach Anspruch 34, **dadurch gekennzeichnet, daß** in eine Gewindespindel-Aufnahmeöffnung (67) beider Halterungen (6a; 6b) eine Kunststoffsicherung (67a) eingeformt ist, derart, daß der kreisrunde Querschnitt der Gewindespindel-Aufnahmeöffnungen (67) erhalten bleibt und die Breite b der Kunststoffsicherung (67a) größer als der Durchmesser d der Gewindespindel-Aufnahmeöffnungen (67) ist, wobei im Falle der Notbetätigung die Kunststoffsicherung (67a) entfernbar ist und die Gewindespindel (5) in den freiwerdenden Raum ausweichen kann.

## Claims

1. Spindle or worm drive for adjusting devices in motor vehicles, more particularly for seat adjusting devices, window lifters and sliding roofs, with a fixed spindle (5) or a fixed toothed rack (51) which is fixed on a first of two relatively displaceable parts, with a gear (9,9') which is mounted on the second of the relatively displaceable parts, and with a gear housing (7) for holding the gear, with the gear housing (7) consisting of at least two housing plates (71, 72, 71a, 71b, 72a, 72b, 77a, 77b, 78, 79) which can be fixed against each other by means of plug-type connectors, **characterised in that** the position of the housing plates (71, 72, 71a, 71b, 72a, 72b, 77a, 77b, 78, 79) is fixed relative to each other in all three-dimensional directions by means of the plug-type connectors and that the plug-type connectors are formed at the same time as supporting connecting joints which absorb the gear forces.

2. Drive according to claim **characterised in that** the housing plates (71, 72, 71a, 71b, 72a, 72b, 77a, 77b, 78, 79) are fixed against each other solely at the plug-type connections.

3. Drive according to claim 1 or 2 **characterised in that** the gear housing (7) consists of two L-shaped housing plates (77a, 77b).

4. Drive according to claim 1 or 2 **characterised in that** the gear housing (7) consist of at least two pairs of opposing disc-like housing plates (71a, 71b, 72a 72b) wherein the housing plates (71a, 71b, 72a, 72b) which are arranged in pairs are preferably identical in design.

5. Drive according to claim 1 or 2 **characterised in that** the gear housing (7) consists of a U-shaped (78) housing plate and a disc like housing plate (79).

6. Drive according to one of the preceding claims **characterised in that** the raised areas (76, 76', 76'') of the plug-type connections extend along the plane of the housing plates (72, 72a, 72b, 77, 78) and the associated recesses (75, 75', 75'') extend transversely to the plane of the housing plates (72, 72a, 72b, 77, 78).

7. Drive according to claim 6 **characterised in that** the recesses are formed as through openings (75, 75', 75'').

8. Drive according to claim 6 **characterised in that** the raised areas are formed as webs (76, 76', 76'').

9. Drive according to one of claims 6 to 8 **characterised in that** the raised areas (76, 76', 76'') of the plug-type connectors have in the assembly direction parallel surfaces (761, 762, 761', 762') associated with matching recesses (75, 75', 75'') with surfaces (751, 752, 751', 752') which are likewise parallel in the assembly direction.

10. Drive according to one of claims 6 to 8 **characterised in that** the raised areas (76, 76', 76'') of the plug-type connectors have surfaces running conical in the assembly direction and associated with recesses (75, 75', 75'') having surfaces (751, 752) which where necessary are parallel in the assembly direction so that during assembly a press fit is achieved.

11. Drive according to one of claims 6 to 8 **characterised in that** the raised areas (76, 76', 76'') of the plug-type connectors form at first a fit with play with the recesses (75, 75', 75'') and that the fixing of the housing plates (72a, 72b, 77, 78) is achieved by plastic deformation of the material in the area of the plug-type connectors.

12. Drive according to one of the preceding claims **characterised in that** the housing plates (72a, 72b, 77, 78) are made from sintered material, cast material, steel or plastics.

13. Drive according to one of the preceding claims **characterised in that** at least a part of the bearing points (73, 73a, 73b, 74, 74', 74'', 74a, 74b) of the gear elements (91, 91', 92, 93, 94) are integrated in the housing plates (72a, 72b, 77, 78).

14. Drive according to one of the preceding claims **characterised in that** the gear (9) consists of a threaded spindle (5), a spindle nut (92) with an external worm wheel toothing (92) and a drive worm (91) engaging therewith.

15. Drive according to one of the preceding claims **characterised in that** the gear (9) comprises a toothed rack (51), a worm (94) with a worm wheel (93) associated therewith and a drive worm (91') wherein the worm (94) lies on an axis with the worm wheel (93) and is fixedly connected to same.

16. Drive according to one of the preceding claims **characterised in that** the threaded spindle (5) is mounted in the hollow cavity (31) of a box-profile type guide rail (3, 4) of a longitudinal seat adjustment device wherein the threaded spindle (5) is fixed through its ends on the bottom rail (4) which is fixed on the vehicle whilst the gear housing (7) is fixed on the top rail (3) which is displaceable relative thereto.

17. Drive according to claim 16 **characterised in that** the gear housing (7) is mounted in a U-shaped gear socket (81) of a holder (8) whose arms (82a, 82b) are provided for fixing the gear (9) on the top rail (3).

18. Drive according to claim 16 and 17 **characterised in that** the arms (82a, 82b) of the holder (8) extend over the entire length of the top rail (3) and support fastening openings (83) associated with the fastening openings (30) of the top rail (3) so that the holder (8) can be connected to the top rail (3) and reinforces same.

19. Drive according to claims 16 to 18 **characterised in that** the fastening openings (83) of the holder (8') are formed as fastening elements (84) with internal threads, preferably in the form of passages, which project into the hollow cavity (31).

20. Drive according to claims 16 to 19 **characterised in that** the gear (9) is pre-assembled as a complete unit and, installed in the holder (8'), can be pushed into the hollow cavity (31) of the rail guide (3, 4) where it can be screwed to the top rail (3) through the fastening openings (83).

21. Drive according to one of claims 16 to 20 **characterised in that** the end areas (85a, 85b) of the holder (8') are angled and designed so that they substantially fill out the free cross-sectional area of the top rail (3) and/or the bottom rail (4).

22. Drive according to one of the preceding claims **characterised in that** uncoupling elements (10a, 10b) of rubber or plastics are mounted to eliminate noise and compensate for tolerances between the gear (9) and the arms (86a, 86b) of the gear socket (81) of the holder (8).

23. Drive according to one of the preceding claims **characterised in that** preset deformation points (87a, 87b) are formed between the arms (86a, 86b) of the gear socket (81) and the arms (82a, 82b) of the holder (8') so that when a predetermined maximum boundary strain is exceeded the arms (86a, 86b) swivel sideways and clamp the threaded spindle (5).

24. Drive according to one of the preceding claims **characterised in that** the ends of the threaded spindle (5) are mounted in vibration-damping sleeves or the like to eliminate noise.

25. Drive according to one of the preceding claims **characterised in that** for a window lifter the threaded spindle (5') is fixed in the vehicle door so that the threaded spindle (5') points in the direction of movement of the window pane (12) and that the gear which is connected to the threaded spindle (5') is connected directly or indirectly to the lower edge (12) of the window pane (12).

26. Drive according to one of the preceding claims, **characterised in that** the spindle or worm drive is a constituent part of an adjustment device for adjusting the seat height, seat incline, seat cushion depth, head restraint and/or backrest.

27. Method for assembling a gear housing for a spindle or worm drive according to one of the preceding claims in which
a) the gear elements (91, 92, 93, 94) and housing plates (72a, 72b, 77, 78) are preassembled wherein the housing plates (72a; 72b; 77, 78) are fitted together and the plug-type connections are formed as supporting connecting joints absorbing the gear forces,
b) the gear elements (91, 92, 93, 94) and housing plates (72a, 72b, 77, 78) are inserted into a device which holds the housing (7) with sufficiently light holding forces around the outer contour so that that the housing plats (72a, 72b, 77, 78) can be aligned when the gear elements (91, 92, 93, 94) are rotated,
c) the gear elements (91, 92, 93, 94) are rotated for the purpose of aligning the bearing points (73a, 73, 74a, 74b) of the gear elements which are provided on the housing plates (72a, 72b, 77, 78),
d) and that after alignment by increasing the holding forces the position of the gear elements (91, 92, 93, 94) and housing plates (72a, 72b, 77, 78) relative to each other is secured and the position of the housing plates is permanently fixed in all three-dimensional directions through action on the plug-type connectors.

28. Method for assembling a gear housing for the spindle or worm drive according to claim 27 **characterised in that** the gear elements (91, 92, 93, 94) are rotated about at least 360° and are then held in this position and fixed.

29. Method for assembling a gear housing for the spindle or worm drive according to claim 27 **characterised in that** the gear elements (91, 92, 93, 94) are driven at a speed which is above the nominal speed of the gear (9) and during rotation of the gear elements (91, 92, 93, 94) the position of the housing plates (72a, 72b, 77, 78) are fixed relative to each other.

30. Method for assembling a gear housing for the spindle or worm drive according to claim 27 **characterised in that** the fixing of the housing plates (72a, 72b, 77, 78) is produced by staking the material in the area of the plug-type connectors, but outside of the area of the bearing bores (74a, 74b) for the spindle nut (92).

31. Method for assembling a gear housing for the spindle or worm drive according to claim 27 **characterised in that** the fixing of the housing plates (72a, 72b, 77, 78) is undertaken by laser welding or by casting the plug-type connectors.

32. Method for assembling a gear housing for the spindle or worm drive according to claim 27 **characterised in that** the fixing of the housing plates (72, 72b, 77, 78) is carried out by glueing the plug-type connectors.

33. Method for assembling a gear housing for the spindle or worm drive according to claim 27 **characterised in that** holding the outer contour of the housing plates (72a, 72b, 77, 78), rotating the gear elements (91, 92, 93, 94) and staking the plug-type connectors are carried out in one combined assembly device.

34. Spindle drive according to one of the Claims 1 to 26, **characterised in that** a threaded spindle (5) is tensioned rotationally secured between two holders (5a, 5b) at the ends, wherein the threaded spindle is associated with a spindle nut mounted in a gear, the threaded spindle (5) is fixed through at least one preset break point in at least one holder (5a, 6b) and that at least one end of the threaded spindle (5) is formed as a positive locking element (66a) which can be connected to a rotating tool in order to overcome the preset break point for the purpose of an emergency operation of the drive.

35. Spindle drive according to claim 34 **characterised in that** a threaded element (60) which has a groove (61) as a local material weakened area is welded to one of the holders (6a, 6b) and the threaded element (60) is deformed through this area of weakened material against the threaded spindle (5).

36. Spindle drive according to claim 34 **characterised in that** the threaded element (60''') has on the side remote from the holder (6a, 6b) a distance sleeve (69) for defining the travel path of the top rail (3) on the bottom rail (4).

37. Spindle drive according to claim 34 **characterised in that** for holding the threaded spindle (5) one of the holders (6a, 6b) has a passage (62) which is deformed against the threaded spindle (5) at at least one place.

38. Spindle drive according to claim 34 **characterised in that** a threaded element (60) is welded to one of the holders (6a, 6b) and this is associated with a counter nut (63) for fixing the position of the threaded spindle (5).

39. Spindle drive according to claim 34 **characterised in that** a nut (34) which is held secured against rotation in positive locking engagement through a stop (6e) on one of the holders (6a, 6b) is welded to the threaded spindle (5) at at least one spot so that the welding spot (60a) is formed as a preset break point.

40. Spindle drive according to claim 34 **characterised in that** an anti-rotation lock preferably made of plastics and mounted secured against rotation on the threaded spindle (5) is inserted with positive locking engagement into a threaded spindle receiving bore (65b) of a security plate (65) wherein the anti-rotation lock (66) is destroyed during emergency operation of the threaded spindle (5).

41. Spindle drive according to claim 34 **characterised in that** the security plate (65) fixes through a bracket (65a) the position of a nut (64') which is mounted on the threaded spindle (5) and secures the position of the threaded spindle (5).

42. Spindle drive according to claim 34 **characterised in that** a plastics security member (67a) is shaped in a threaded spindle receiving opening (67) of both holders (6a, 6b) so that the circular round cross-section of the threaded spindle receiving openings (67) remains secure and the width b of the plastics security member (67a) is greater than the diameter d of the threaded spindle receiving opening (67) wherein in the case of an emergency operation the plastics security member (67a) can be removed and the threaded spindle (5) can escape into the space which becomes available.

## Revendications

1. Dispositif d'entraînement à broche ou à vis sans fin pour des dispositifs de réglage dans des véhicules automobiles, notamment pour des dispositifs de réglage de sièges, des lève-glace et des toits coulissants, comportant une broche fixe (5) ou une crémaillère fixe (51), qui est fixée sur une première de deux parties réglables l'une par rapport à l'autre, un mécanisme (9,9'), qui est monté sur la seconde des parties réglables l'une par rapport à l'autre, et un carter de mécanisme (7) servant à loger le mécanisme, le carter de mécanisme (7) étant constitué par au moins deux plaques (71;72;71a;71b;72a;72b;77a;77b;78;79) pouvant être fixées l'une à l'autre à l'aide de liaisons à enfichage, **caractérisé en ce que** la position relative des plaques (71;72;71a;71b;72a;72b;77a;77b;78;79) du carter est fixée dans toutes les directions de l'espace et que les liaisons à enfichage sont agencées simultanément sous la forme de zones de liaison porteuses qui absorbent les forces du mécanisme.

2. Dispositif d'entraînement selon la revendication 1, **caractérisé en ce que** les plaques (71;72;71a;71b; 72a;72b;77a;77b;78;79) du carter sont fixées entre elles exclusivement au niveau des liaisons à enfichage.

3. Dispositif d'entraînement selon la revendication 1 ou 2, **caractérisé en ce que** le carter (7) du mécanisme est constitué de deux plaques en forme de L (77a;77b).

4. Dispositif d'entraînement selon la revendication 1 ou 2, **caractérisé en ce que** le carter (7) du mécanisme est constitué de deux couples de plaques (71a;71b; 72a;72b) du carter, qui sont agencées en forme de disques et sont en vis-à-vis l'une de l'autre, les plaques (71a;71b;72a;72b) du carter, qui sont associées entre elles par couples, étant agencées de préférence de manière à être identiques.

5. Dispositif d'entraînement selon la revendication 1 ou 2, **caractérisé en ce que** le carter (7) du mécanisme est constitué par une plaque en forme de U (78) et par une plaque en forme de disque (79).

6. Dispositif d'entraînement selon l'une des revendications précédentes, **caractérisé en ce que** les parties surélevées (76;76';76") des liaisons à enfichage s'étendent le long du plan des plaques (72;72a;72b;77;78) du carter et les évidements associés (75,75',75") s'étendent transversalement par rapport au plan des plaques (72;72a;72b;77;78) du carter.

7. Dispositif d'entraînement selon la revendication 6, **caractérisé en ce que** les évidements sont agencés sous la forme d'ouvertures traversantes (75;75';75").

8. Dispositif d'entraînement selon la revendication 6, **caractérisé en ce que** les zones surélevées sont agencées sous la forme de barrettes (76;76';76").

9. Dispositif d'entraînement selon l'une des revendications 6 à 8, **caractérisé en ce que** les parties surélevées (76;76';76") des liaisons à enfichage comportent des surfaces parallèles dans la direction de montage (761;762;761';762'), auxquelles sont associés des évidements ajustés de façon précise (75;75';75") comportant également des surfaces parallèles dans la direction de montage (751;752;751';752').

10. Dispositif d'entraînement selon l'une des revendications 6 à 8, **caractérisé en ce que** les parties surélevées (76;76';76") des liaisons à enfichage possèdent des surfaces s'étendant selon une disposition conique dans la direction de montage et auxquelles sont associés des évidements (75;75';75") comportant des surfaces éventuellement parallèles dans la direction de montage (751;752), de sorte qu'un ajustement serré est établi lors du montage.

11. Dispositif d'entraînement selon l'une des revendications 6 à 8, **caractérisé en ce que** les parties surélevées (76;76';76") des liaisons à enfichage forment tout d'abord, avec les évidements (75;75';75"), un ajustement avec un certain jeu et que la fixation des plaques (72a;72b;77;78) du carter s'effectue au moyen d'une déformation plastique du matériau dans la zone des liaisons à enfichage.

12. Dispositif d'entraînement selon l'une des revendications précédentes, **caractérisé en ce que** les plaques (72a;72b;77;78) du carter sont réalisées en un matériau de frittage, une fonte, de l'acier ou une matière plastique.

13. Dispositif d'entraînement selon l'une des revendications précédentes, **caractérisé en ce qu'**au moins une partie des points de support (73;73a;73b;74;74';74"; 74a;74b) des éléments (91;91';92;93;94) du mécanisme sont intégrés dans les plaques (72a;72b;77;78) du carter.

14. Dispositif d'entraînement selon l'une des revendications précédentes, **caractérisé en ce que** le mécanisme (9) est constitué par une broche filetée (5), un écrou de broche (92) comportant une denture extérieure (92) de roue tangente et une vis sans fin d'entraînement (91) engrenant avec cette denture.

15. Dispositif d'entraînement selon l'une des revendications précédentes, **caractérisé en ce que** le mécanisme (9) est constitué par une crémaillère (52), une vis sans fin (94) associée à cette crémaillère et comportant une roue tangente (93) et par une vis sans fin d'entraînement (91'), la vis sans fin (94) étant située avec la roue tangente (93) sur un axe et étant reliée de façon fixe à la roue tangente.

16. Dispositif d'entraînement selon l'une des revendications précédentes, **caractérisé en ce que** la broche filetée (5) est disposée dans la cavité (31) d'un rail de guidage à profil en forme de boîte (3;4) d'un dispositif de réglage longitudinal du siège, la broche filetée (5) étant fixée, au moyen de ses extrémités sur le rail inférieur (4), fixé au véhicule, et le carter (16) du mécanisme étant fixé sur le rail supérieur (3) déplaçable par rapport au rail inférieur.

17. Dispositif d'entraînement selon la revendication 16, **caractérisé en ce que** le carter (16) de la boîte de vitesses est supporté dans un logement de mécanisme en forme de U (81) d'un dispositif de retenue (8), dont les branches (82a;82b) sont prévues pour la fixation de la boîte de vitesses (9) sur le rail supérieur (3).

18. Dispositif d'entraînement selon les revendications 16 et 17, **caractérisé en ce que** les branches (82a;82b) du dispositif de retenue (8) s'étendent sur toute la longueur du rail supérieur (3) et comportent des ouvertures de fixation (83), auxquelles sont associées des ouvertures de fixation (30) du rail supérieur (3), de sorte que le dispositif de retenue (8) peut être relié au rail supérieur (3) et rigidifie ce dernier.

19. Dispositif d'entraînement selon les revendications 16 à 18, **caractérisé en ce que** les ouvertures de fixation (83) du dispositif de retenue 8') sont agencées sous la forme d'éléments de fixation (84) comportant un taraudage, de préférence sous la forme de passages traversants, qui débouchent dans la cavité (31).

20. Dispositif d'entraînement selon les revendications 16 à 19, **caractérisé en ce que** le mécanisme (9) peut être inséré à l'état entièrement préassemblé et en étant incorporé dans le dispositif de retenue (8'), dans la cavité (31) du guide à rails (3;4) et peut être vissé par l'intermédiaire des ouvertures de fixation (83) au rail supérieur (3).

21. Dispositif d'entraînement selon l'une des revendications 16 à 20, **caractérisé en ce que** les parties d'extrémité (85a;85b) du dispositif de retenue (8') sont coudées ou agencées de telle sorte qu'elles remplissent dans une très large mesure l'extrémité libre du rail supérieur (3) et/ou du rail inférieur (4).

22. Dispositif d'entraînement selon l'une des revendications précédentes, **caractérisé en ce que** des éléments de découplage (10a;10b) en caoutchouc et en matière plastique sont disposés, pour le découplage des bruits et pour la compensation de tolérances, entre le mécanisme (9) et les branches (86a;86b) du logement de mécanisme (81) du dispositif de retenue (8).

23. Dispositif d'entraînement selon l'une des revendications précédentes, **caractérisé en ce que** des zones de déformation de consigne (87a;87b) sont formées entre les branches (86a;86b) du logement de mécanisme (81) et les branches (82a;82b) du dispositif de retenue (8'), de sorte que lors du dépassement d'une charge limite maximale prédéterminée, les branches (86a;86b) pivotent latéralement et bloquent la broche filetée (5).

24. Dispositif d'entraînement selon l'une des revendications précédentes, **caractérisé en ce que** pour le découplage du bruit, les extrémités de la broche filetée (5) sont montées dans des coussinets amortissant les vibrations, ou analogues.

25. Dispositif d'entraînement selon l'une des revendications précédentes, **caractérisé en ce que** pour un lève-glace, la broche filetée (5') est fixée dans la portière d'un véhicule automobile, que la broche filetée (5') est orientée dans la direction de déplacement de la vitre (12) de la fenêtre et que le mécanisme (9'), qui est relié à la broche filetée (15'), est relié de façon directe ou indirecte au bord inférieur (12) de la vitre (12) de la fenêtre.

26. Dispositif d'entraînement selon l'une des revendications précédentes, **caractérisé en ce que** le dispositif d'entraînement à broche ou à vis sans fin fait partie d'un dispositif de réglage de la hauteur du siège, de l'inclinaison du siège, de la profondeur du coussin de siège, de l'appui-tête et/ou du dossier.

27. Procédé pour le montage d'un carter de mécanisme pour un dispositif d'entraînement à broche ou à vis sans fin selon l'une des revendications précédente, selon lequel
a) les éléments (91;92;93;94) du mécanisme et les plaques (72a;72b;77;78) du carter sont préassemblés à l'état complet, les plaques (72a;72b;77,78) du carter étant réunies par enfichage et les liaisons enfichées étant agencées en tant que zones de liaison porteuses, qui supportent des forces du mécanisme,
b) les éléments (91;92;93;94) du mécanisme et les plaques (72a;72b;77;78) du carter sont insérés dans un dispositif, qui saisit le carter (7) au niveau de son contour extérieur, avec des forces de retenue suffisamment faibles pour que les plaques (72a;72b;77;78) du carter puissent s'aligner lors de la rotation des éléments (91;92;93;94) du mécanisme,
c) on fait tourner les éléments (91;92;93;94) du mécanisme pour l'alignement des zones de palier (73a;73b;74a;74b) des éléments du mécanisme, qui sont prévus sur les plaques (72a;72b;77;78) du carter, et
d) après l'alignement moyennant une augmentation des forces de retenue, on maintient fermement les éléments (91;92; 93;94) du mécanisme et les plaques (72a;72b;77;78) du carter dans leur position réciproque, et on fixe de façon permanente la position des plaques du carter dans toutes les directions spatiales en agissant sur les liaisons à enfichage.

28. Procédé pour le montage d'un carter de mécanisme pour le dispositif d'entraînement à broche ou à vis sans fin selon la revendication 27, **caractérisé en ce qu'**on fait pivoter sur au moins 360° les éléments (91;92;93;94), qu'on les maintient ensuite dans cette position et qu'on les fixe.

29. Procédé pour le montage d'un carter de mécanisme pour le dispositif d'entraînement à broche ou à vis sans fin selon la revendication 27, **caractérisé en ce que** les éléments (91;92;93;94) du mécanisme sont entraînés avec une vitesse de rotation qui est supérieure à la vitesse de rotation nominale du mécanisme (9) et, pendant la rotation des éléments (91;92;93;94) du mécanisme, la position relative des plaques (72a;72b;77;78) du carter est fixée.

30. Procédé pour le montage d'un carter de mécanisme pour dispositif d'entraînement à broche ou à vis sans fin selon la revendication 27, **caractérisé en ce que** la fixation des plaques (72a;72b;77;78) du carter s'effectue par coincement du matériau dans la zone des liaisons à enfichage, mais à l'extérieur de la zone des alésages de palier (74a;74b) de l'écrou de broche (92).

31. Procédé pour le montage d'un carter de mécanisme pour le dispositif d'entraînement à broche ou à vis sans fin selon la revendication 27, **caractérisé en ce que** la fixation des plaques (72a;72b;77;78) du boîtier s'effectue par soudage laser ou par scellement des liaisons à enfichage.

32. Procédé pour le montage d'un carter de mécanisme pour le dispositif d'entraînement à broche ou à vis sans fin selon la revendication 27, **caractérisé en ce que** la fixation des plaques (72a; 72b; 77; 78) du carter s'effectue par collage des liaisons à enfichage.

33. Procédé pour le montage d'un carter de mécanisme pour le dispositif d'entraînement à broche ou à vis sans fin selon la revendication 27, **caractérisé en ce que** le maintien du contour extérieur des plaques (72a,72b;77;78), la rotation des éléments (91;92;93;94) du mécanisme et le matage des liaisons à enfichage s'effectue dans un dispositif de montage combiné.

34. Procédé pour le montage d'un carter de mécanisme pour le dispositif d'entraînement à broche ou à vis sans fin selon les revendications 1 à 26, **caractérisé en ce qu'**une broche filetée (5) est serrée en étant bloquée en rotation entre deux dispositifs de retenue d'extrémité (5a;5b), un écrou de broche disposé dans un mécanisme étant associé à la broche filetée, que la broche filetée (5) est fixée à l'aide d'au moins une zone de rupture de consigne dans au moins un dispositif de retenue (6a;6b) et qu'au moins une extrémité de la broche filetée (5) est agencée sous la forme d'un élément de liaison à formes complémentaires (66a), qui peut être relié à un outil rotatif pour vaincre la zone de rupture de consigne pour l'actionnement d'urgence du dispositif d'entraînement.

35. Procédé pour le montage d'un carter de mécanisme pour le dispositif d'entraînement à broche ou à vis sans fin selon la revendication 34, **caractérisé en ce qu'**un élément fileté (60), qui comporte comme affaiblissement local du matériau une rainure (61), est soudé à l'un des dispositifs de retenue (6a;6b) et que l'élément fileté (60) est serré avec la broche filetée (5), au-dessus de cet affaiblissement du matériau.

36. Dispositif d'entraînement à broche selon la revendication 34, **caractérisé en ce que** l'élément fileté (60"') situé sur le côté tourné à l'opposé du dispositif de retenue (6a;6b) possède une douille d'entretoisement (69) pour limiter le trajet de déplacement du rail supérieur (3) sur le rail inférieur (4).

37. Dispositif d'entraînement à broche selon la revendication 34, **caractérisé en ce que** pour la réception de la broche filetée (5), l'un des dispositifs de retenue (6a;6b) possède un embout (62) qui est serré en au moins un emplacement avec la broche filetée (5).

38. Dispositif d'entraînement à broche selon la revendication 34, **caractérisé en ce que** l'élément fileté (60) est soudé à l'un des dispositifs de retenue (6a;6b) et un contre-écrou (63) est associé à ce dispositif de retenue pour fixer en position la broche filetée (5).

39. Dispositif d'entraînement à broche selon la revendication 34, **caractérisé en ce qu'**un écrou (64), qui est retenu selon une liaison à engagement positif, d'une manière bloquée en rotation, par l'intermédiaire d'une butée (6a) sur l'un des dispositifs de retenue (6a;6b), est soudé à la broche filetée (5) en au moins un emplacement de telle sorte que le point de soudure (60a) est agencé sous la forme d'un point de rupture de consigne.

40. Dispositif d'entraînement à broche selon la revendication 34, **caractérisé en ce qu'**un dispositif de blocage en rotation (66), qui est réalisé de préférence en matière plastique et est disposé d'une manière bloquée en rotation sur la broche filetée (5), est inséré selon une liaison engagement positif dans un perçage (65b) de réception de la broche filetée, qui est formé dans une tôle de sécurité (65), le système de blocage en rotation (66) étant détruit lors de l'actionnement d'urgence de la broche filetée.

41. Dispositif d'entraînement à broche selon la revendication 34, **caractérisé en ce que** la tôle de sécurité (65) fixe, au moyen d'une patte (65a), la position d'un écrou (64'), qui est disposé sur la broche filetée (5) et bloque la broche filetée (5).

42. Dispositif d'entraînement à broche selon la revendication 34, **caractérisé en ce qu'**un dispositif de sécurité en matière plastique (67a) est formé dans une ouverture (67) de logement de la broche filetée des deux dispositifs de retenue (6a;6b), de telle sorte que la section transversale de forme circulaire des ouvertures (67) de logement de la broche filetée reste conservée et que la largeur b de l'élément de sécurité en matière plastique (67a) est supérieure au diamètre d des ouvertures (67) de logement de la broche filetée, et dans le cas de l'actionnement d'urgence, l'élément de sécurité en matière plastique (67a) peut être retiré et la broche filetée (5) peut s'écarter dans l'espace qui se libère.
